# EUROPEAN PATENT SPECIFICATION

(11) **EP 1 283 639 B1**
(45) Date of publication and mention of the grant of the patent: **02.05.2007**
(21) Application number: 01306833.3
(22) Date of filing: 10.08.2001
(51) Int. Cl.: H04N 7/173

(54) **Methods and apparatus for reproducing prerecorded and live works stored on a server**
Verfahren und Gerät zur voraufgezeichneten und direkten Wiedergabe von auf einem Server gespeicherter Arbeiten
Procédé et appareil pour la reproduction des oeuvres préenregistrées et en direct stockées sur un serveur

(43) Date of publication of application: 12.02.2003
(73) Proprietor: Broadbus Technologies, Inc., Wheeling, Illinois 60090 (US)
(72) Inventor: Binder, Jeffrey, Northbrook, Illinois 60062 (US); Scheffler, Robert, Glen Ellyn, Illinois 60137 (US)
(74) Representative: Palmer, Jonathan R.

(56) References cited:
- EP-A- 0 661 855
- EP-A- 1 061 465
- WO-A-00/69163
- WO-A-01/10125
- WO-A-91/03112
- WO-A-95/15658
- WO-A-98/37696
- US-A- 5 815 662

## Description

This invention relates to methods and apparatus for recording and reproducing prerecorded and live audio, visual and audiovisual works stored on a server, and more particularly, to methods and apparatus for recording a work on a server and reproducing the recorded portion of the work while the work is still in progress. This invention further relates to methods and apparatus for inserting advertisements and the like into prerecorded and live works when the works are reproduced.

Users of the Internet can access sites, which provide video, audio and audiovisual (collectively "audiovisual") works more or less on demand. Those sites generally store such works in long term storage (e.g., disk memory), and reproduce the works through a relatively small RAM buffer. The stored works can be reproduced nearly on demand, but traditionally not while a work is actually in progress. This is a significant limitation to potential users who decide to view a television show, for example, from the beginning of the show, but miss the first portion of the show, or neglect to otherwise record the program in a video cassette recording or other time phase (delay) recording device. Also, these works are generally very low bandwidth/resolution and not DVD quality MPEG2 video. Additionally, current demand based systems lack the aforementioned features in connection with the ability to simultaneously provide thousands of unique streams of audiovisual information asynchronously to consumers wishing to view unique audiovisual programs on demand, including television, movies and the like. Thus, there is a need for methods and apparatus for recording an audiovisual work on a server and asynchronously reproducing the recorded portion of the work while the work is still in progress.

Time delay recording features, i.e., replaying a work while it is in progress, are available on hard disk recorders, but such recorders are generally located at the consumer's site and are difficult for many consumers to program and operate. Moreover, the devices are expensive, and only one program can be recorded at a time. Finally, there is no ability to record multiple streams of audiovisual works and reproduce them to a large number of viewers simultaneously or on demand. Thus, there is a need for methods and apparatus for reproducing high bandwidth, high resolution audiovisual works while they are in progress which are easier to operate from a customer's perspective, which can, additionally, allow multiple programs to be stored and reproduced simultaneously without requiring the user to preprogram the device or set it to record.

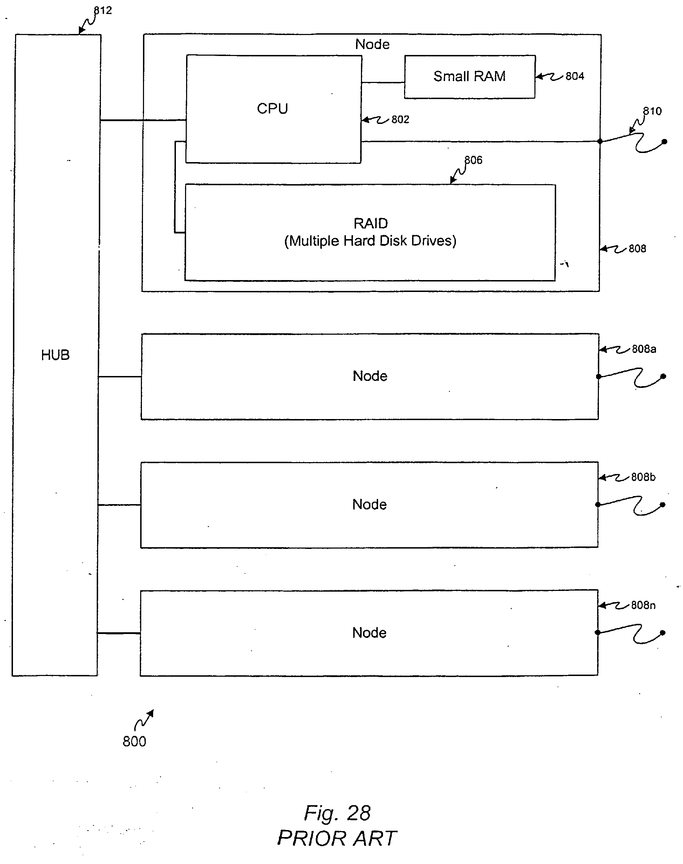

A known system for reproducing audiovisual works on demand is shown in Fig. 28. Such a system 800 includes a server computer (CPU) 802 having a relatively small RAM 804. A redundant array of inexpensive disk drives (RAID) 806 is operatively connected to the server 802. The RAID 806 is a long term disk storage device which can store audio, visual and/or audiovisual works. The server 802, RAM 804 and RAID 806 together form a node 808. The node 808 can output about 30 streams of audiovisual works at an output 810. The output line 810 is typically an OC-3 optical fiber line.

Additional nodes 808a, 808b...808n can be operatively connected to the node 808 through a single multiprocessor hub 812, or a plurality of hubs. The maximum number of nodes, which can be interconnected in such systems, is 256.

The multiprocessor hub interconnects the nodes to produce a total potential output of 7,680 streams. This potential stream output is inadequate for modern server systems, which are relatively large and might service tens of thousands of customers. Moreover, the cost per stream is fairly high in such systems. The size of the library (i.e., the number of selections) in long-term storage is limited, too, because the long-term storage device is usually disk-based. Thus, there is a need for on demand systems for large server systems or networks, which provide higher bandwidth, high-resolution streams and more library selections to multiple users at lower cost.

Replaying television shows, sports events, etc., after the event or original showing is attractive to many network users, and of course the commercial advertisements which are shown during the original event can easily be included when the work is reproduced. Advertisers might or might not pay for such reproductions of their advertisements, however, and some advertisements are only timely for a limited time.

Advertising insertion at the local level is known, but all customers in a defined distribution segment see the same advertisements. In some cases, advertisers want to target audiences with advertisements, which are more likely to appeal to viewers with a particular preference or demographic profile. In other cases, reproduction with selectable advertising time intervals, including no time for advertisements, might be desirable. Thus, there is a need for methods and apparatus for substituting desired commercials or eliminating commercials when prerecorded audiovisual works are reproduced on a network, and targeting segments of the market for selected advertisements. There is also a need to customers to select advertisements in one or more product categories in which they may have an interest, when a work is viewed.

Another problem for advertisers is that viewers often change channels to avoid commercials. There is a need for a method and apparatus which better assures advertisers that advertisements will be reproduced.

WO-A-00/69163 discloses a targeted advertising system based on subgroups. Different subgroups are formed based one or more subscriber characteristics, and different targeted advertisements transmitted to the different subgroups. In the Internet-environment, the subgroups are formed by utilizing multicast addresses. In cable-based and satellite-based systems, the subgroups are formed by node configurations. The targeted advertisements may be transmitted simultaneously with programming and inserted locally, or may be inserted at a centralized distribution point such as a router or a cable television local head-end. An apparatus is presented which receives n program streams and m advertisements, and creates *p* presentation streams containing targeted advertisements, where *p* is greater than *n*.

EP-A-1061465 discloses a method and apparatus for adaptively targeting advertisements to a specific client computer from a server within a distributed data processing system. As a user of the client browses the World Wide Web, the material that is downloaded to the client constitutes a datastream. At some location during the routing of the datastream, either on the server or at the client, the datastream is scanned to generate a list of keywords that are present within the datastream. The datastream may be analysed in real-time or cached and analysed on a delayed basis. The generated list of keywords represents a summary of the content that appears to be the focus of interest of the user. The keywords are compared against a database of advertisements, and the server selects an advertisement that matches the user's area of interest in comparison to the analysis of the user's browsing history. The selected advertisement is then inserted into the datastream to be routed to the client.

WO-A-95/15658 discloses a network manager that monitors and manages cable headend components and set top terminals in a television delivery system. The network manager coordinates the reception of programming and control signals at a headend, storing signals for intelligent selection and distribution. The network manager uses a receiver, a work station, a program control information processing component, a network management CPU, databases, control software and an instruction memory. The network manager uses these components to manage headend components, such as signal reception equipment, an authorization component, a file server, MPEG decoders, buffers and modulators. The network manager accommodates various system services, including near video on demand, virtual video on demand, video on demand, interactive program services, program suggestion features, advertisement targeting, standard and custom menus, and data spooling and text overlaying.

WO-A-98/37696 discloses a broadcast data distribution system which distributes directory and indexing information for the selection of viewing choices in broadcast and multicast networks with asymmetric uplink/downlink bandwidths. Examples of such systems include Digital Broadcast Satellite (DBS) and Cable Television (CATV) systems. The system co-locates shared directory resources at directory servers which can provide the benefit of technology improvement through storage multiplexing to directory clients, which are assumed to have smaller, more heterogeneous and slowly-evolving memory and processing resources. The directory information stored at the directory clients is a subset of the information maintained at the directory servers selected on the basis of subscriber interest. This system automatically constructs both a target profile for each target object (program) that is broadcast, as well as a "target profile interest summary" for each subscriber, which target profile interest summary describes the subscriber's interest level in various types of target objects. The system then evaluates the target profiles against the subscriber's target profile interest summaries to generate a subscriber-customised rank ordered listing of target objects most likely to be of interest to each subscriber, so that the subscriber can select from among these potentially relevant target objects, which were automatically selected by this system from the plethora of target objects available on the data distribution system.

Accordingly, it is desirable to provide new and improved methods and apparatus for reproducing prerecorded audiovisual works stored on a server, including Internet servers.

It is also desirable to provide new and improved methods and apparatus for recording an audiovisual work on a server and reproducing the recorded portion of the work while the work is still in progress.

It is also desirable to provide new and improved methods and apparatus for reproducing a larger library of audiovisual works on relatively large networks at relatively low cost.

It is also desirable to provide new and improved methods and apparatus for removing or inserting different commercial advertisements in prerecorded audiovisual works when they are reproduced.

It is also desirable to provide new and improved methods and apparatus for targeting audiences with advertisements which are more likely to appeal to a viewer with a particular profile.

It is also desirable to provide new and improved methods and apparatus for better assuring advertisers that advertisements are actually viewed.

According to a first aspect of the present invention there is provided a method of recording video and/or audio programs and reproducing said programs on demand, said method comprising the steps of: reproducing source signals, encoding said source signals for storage in a storage device, identifying said source signals under unique item addresses, storing the unique item addresses in a database, storing said encoded source signals in a storage device for subsequent retrieval, creating a menu of items from said unique item addresses stored in said database, transmitting the menu of items over a network to a customer device, displaying said menu of items, selecting one or more of said displayed items from a customer device for reproduction, reproducing said encoded source signals corresponding to said selected item, transmitting said reproduced encoded source signals over a network to the customer device, and reproducing said encoded source signals from said customer device for playback in either an audio and/or video format; characterised in that, during the course of storing said encoded source signals for a program in said storage device, the encoded source signals for that program are reproduced and transmitted to said customer device.

According to a second aspect of the present invention there is provided apparatus for recording video and/or audio programs and reproducing said programs on demand, the apparatus comprising: means for reproducing source signals, means for encoding said source signals for storage in a storage device, means for identifying said source signals under unique item addresses, means for storing the unique item addresses in a database, means for storing said encoded source signals in a storage device for subsequent retrieval, means for creating a menu of items from said unique item addresses stored in said database, means for transmitting the menu of items over a network to a customer device, means for displaying said menu of items, means for selecting one or more of said displayed items from a customer device for reproduction, means for reproducing said encoded source signals corresponding to said selected item, means for transmitting said reproduced encoded source signals over a network to the customer device, and means for reproducing said encoded source signals from said customer device for playback in either an audio and/or video formal characterised in that the means for reproducing and transmitting the encoded source signals are operable, during the course of storing by the source signals storing means of said encoded source signals for a program in said storage device, to reproduce and transmit to said customer device the encoded source signals for that program.

In one embodiment of this invention, prerecorded audio, video and audiovisual works stored on a server can be reproduced by storing a work in a RAM array and streaming the work fairly directly to customers on demand. A customer can enjoy an audiovisual work such as a television show, sports event on television, or the like, from the beginning of the broadcast, even if the customer begins watching the work while it is still in progress. The work can also be reproduced after it is completed. Advertisements shown during the reproduction can be selected and changed by the provider, as desired.

The above mentioned and other features of this invention and the manner of obtaining them will become more apparent, and the invention itself will be best understood with reference to the following description of an embodiment of the invention taken in conjunction with the accompanying drawings, in which:
Fig. 1 is a block diagram of an embodiment of apparatus made in accordance with the present invention;
Fig. 2 is a block diagram of content provider equipment used in the apparatus of Fig. 1;
Fig. 3 is a block diagram of an embodiment of the customer device shown in Fig. 1;
Fig. 4 is a chart showing the operation of a portion of the present invention;
Fig. 5 is another chart showing operation of a portion of the present invention;
Fig. 6 is another chart showing the operation of a portion of the present invention;
Fig. 7 is another chart showing the operation of a portion of the present invention;
Fig. 8 is also a chart showing the operation of a portion of the present invention;
Fig. 9 is another chart showing the operation of a portion of the present invention;
Fig. 10 is another chart showing the operation of a portion of the present invention;
Fig. 11 is another chart showing the operation of a portion of the present invention;
Fig. 12 is a diagram showing the general structure of data of the present invention;
Fig. 13 is a diagram showing the operation of a portion of the present invention;
Fig. 14 is a block diagram showing the apparatus of the present invention used in a multiple site system;

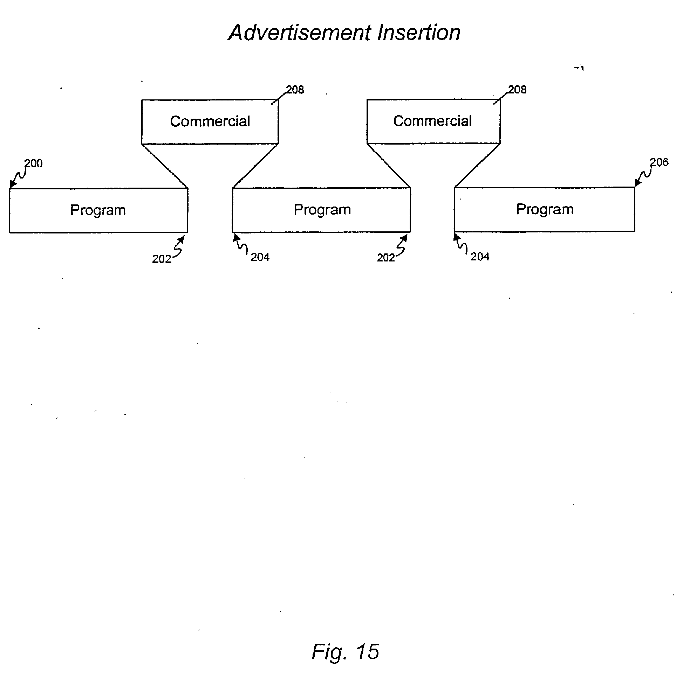

Fig. 15 is a timing diagram for commercial insertion;
Fig. 16 is an example of a music database table for use in the present invention;
Fig. 17 is an example of a movie database table for use in the present invention;
Fig. 18 is an example of a television database table for use in the present invention;
Fig. 19 is an example of a radio database table for use in the present invention;
Fig. 20 is an example of a customer database table for use in the present invention;
Fig. 21 is a an example of an owner database table produced in the present invention;
Fig. 22 is an example of an advertiser database table for use in the present invention;
Fig. 23 is an example of a devices database table for use in the present invention;
Fig. 24 is an example of a user profile database table for use in the present invention;
Fig. 25 is an example of a searches database table for use in the present invention;
Fig. 26 is an example of a favorites database table for use in the present invention;
Fig. 27 is an example of a commercial database table for use in the present invention; and
Fig. 28 is a block diagram of a known server system.

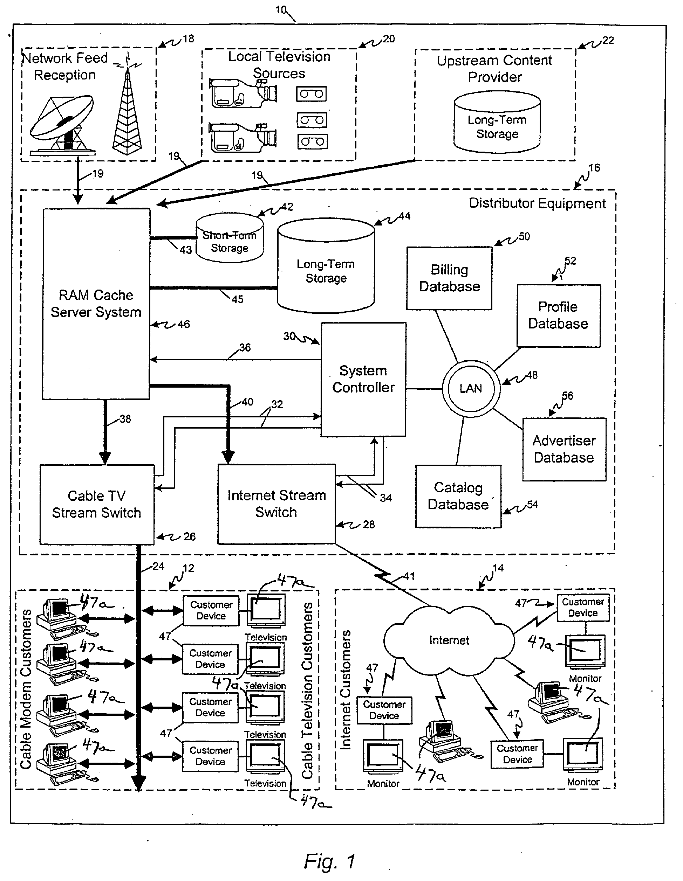

Referring to Fig. 1, a multimedia server system 10 includes a plurality of cable television and/or cable modem users or customers 12, and perhaps a plurality of Internet users or customers 14, all of whom are served by a distributor 16, such a broadcaster, cable networks, or any provider of audiovisual content to consumers. The distributor 16 receives audio, visual, and/or audiovisual content ("audiovisual works") which is reproduced from various sources, such as a network feed reception 18, local television sources 20, and perhaps upstream content providers 22. Some or all of the audiovisual works are stored in one or more storage devices, as will be explained.

The network feed reception 18 can handle live or recorded works received through satellite dishes, radio antennas, network connection, etc., and the local television sources 20 can produce live broadcasts or prerecorded events. The upstream content providers 22 could be centralized storage libraries of films, commercials, sports events, or any other audiovisual content.

The cable television customers 12 typically communicate with the distributor 16 through a customer device 47 connected to fiber optic cables 24, which are preferable because each fiber optic strand in the cable has a relatively high bandwidth which can accommodate about 2500 information channels or more, including at least one channel for control communications between the customers and the distributor. However, any suitable connection including satellite, cable, wireless, other hard wired connection, or the like with sufficient bandwidth will work equally well. High bandwidth is necessary because it allows a distributor to serve many customers on a single fiber optic cable. Alternatively, existing cable networks may be utilized as a direct connection to the home when combined with a fiber link from the distributors 16 to a hub which converts the signals into a format suitable for transmission on existing cable system lines to the customer device 47. The customers 12, 14 may view and/or listen to works on any suitable display 47a or other reproduction device. Such devices many include a television, personal computer, stereo and the like.

The distributor 16 communicates with the customer device 47 through a cable TV stream switch or hub 26 or other suitable high bandwidth connection. Interactive communications with the Internet customers 14, which may occur over fiber optic cable, a two-line wire system, wireless, satellite connection or the like, are sent and received through an Internet stream switch (hub) 28.

The distributor 16 routes customer requests from the customer device 47 through a system controller 30. Customer requests from the customers 12 are processed through lines 32, and customer requests from the customers 14 are processed through lines 34.

The system controller 30 also executes customer requests. A line 36 is provided for executing playback commands. The playback material is sent to the customer device 47 over a connection 38 through the hub 26 and cable 24. Requested works are played back to the customers 14 through a connection 40, hub 28 and a cable or the like 41.

When a customer request is processed, the system controller 30 retrieves the requested work from the network feed reception 18, one of the local television sources 20, or the server 22. The controller 30 also uses a short term storage device 42, which is preferably a hard disk drive or the like, and a long term storage device 44, which could be a library apparatus which stores a plurality of magnetic tapes, optical disk drive cartridges, etc. The system controller 30 also uses a RAM cache server system 46, which can process a plurality of customer requests simultaneously, and can load information from the short term storage device 42 or the long term storage device 44, as required.

The system controller 30 is also connected to a local area network (LAN) 48, which provides access to a billing database 50, a customer profile database 52, and a catalog database 54. Using these databases, the system controller 30 can find the location of requested content, retrieve and use customer profiles to insert commercials or the like into the work, and bill the customer for requested viewings. The controller 30 also has access to an advertiser database 56, which the controller can use to insert target advertisements according to desired customer profiles. The advertisers can also be billed through the billing database 50, and payments can be made to the owners of the works, as needed. Of course, there are many other ways accounting and billing can be accomplished.

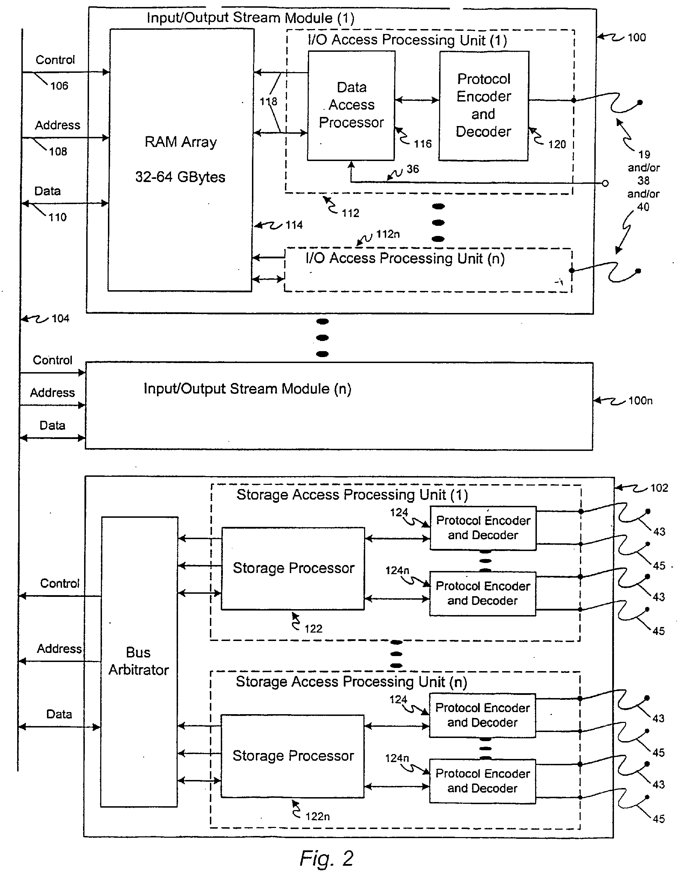

The RAM cache server system 46 is shown in greater detail in Fig. 2. The server 46 includes a plurality of input/output stream modules 100...100n and a storage module 102, all interconnected through a backplane bus 104. Data lines 106, address lines 108 and control lines 110 are provided as needed. Each input/output stream module 100 can typically have up to eight (or more) processing units 112...112n, connected to a large RAM array 114.

The processing units 112 each include a data access processor 116 which communicates with the RAM 114 through control and data lines 118, in response to playback commands received from the system controller 30 on the line 36. Each processing unit 112 also includes a protocol encoder/decoder 120 which can accept an input on lines 19, or produce an output on an OC-12 fiber or other high bandwidth connection in the lines 38 and/or 40 (Fig. 1).

The storage module 102 preferably includes any number of storage processors 122...122n, each of which has a number of associated protocol encoders/decoders 124...124n. The protocol encoder/decoders 124 are connected to the lines 43 and 45, for access to short term storage 42 and long term storage 44, respectively. The storage module 102 controls incoming and outgoing data through a bus arbitrator 126. The lines 43 and 45 can be one Gbit/sec fibre channel, one Gbit/sec Ethernet cable, or any other suitable high bandwidth connection.

As seen in Fig. 2, each of the data access processors 116 has direct access to its associated RAM 114, and virtually direct access to the RAM arrays 114 in the other input/output stream modules 100 because the system does not require hubs or other processors between the different RAM arrays. The data access processors RAM arrays 116 also have virtually direct access to short term storage 42 and long term storage 44, through the back plane 104. In this manner, a virtually unlimited number of streams can be output because the RAM arrays are essentially directly accessible to the output channels.

Each RAM array 114 preferably has at least 32-64 gigabytes of memory. Since modern compression techniques such as MPEG video can store about eight seconds of an audiovisual work in about four megabytes of memory, each RAM 114 can store up to about 36 hours of recorded information with present compression techniques. Of course, the size of the RAM array 114 may be larger or smaller, depending on the compression technique used and the amount oftime to be stored. Also, because incoming material is stored directly in the RAM 114, playback can begin while the original work is still in progress, which is a form of time phase recording/reproduction. The time phase delay can be any desired amount of time. In fact, the source information can be reproduced and transmitted at nearly the identical time that the information is stored before the entire work is stored.

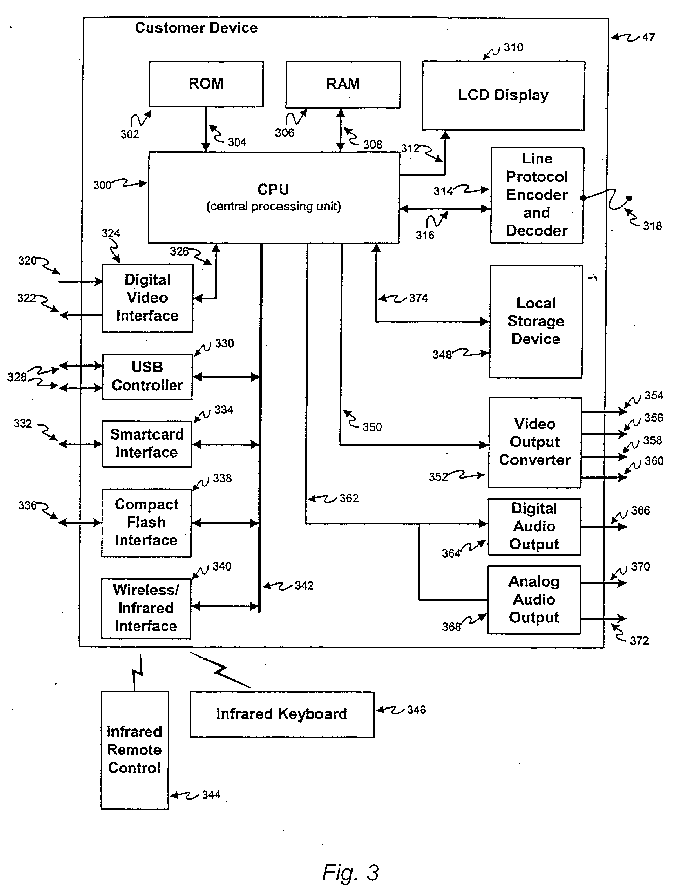

Fig. 3 is a detailed drawing of a typical customer device 47 which is used by a consumer 12, 14 to reproduce audiovisual works to a viewing and/or listening device such as a television, monitor, computer or stereo. The term audiovisual works is intended to mean works of audio nature, video nature or a combination of both. The customer device operates by using a central processing unit (CPU) 300. The CPU 300 retrieves instructions from the ROM 302 over data bus 304. ROM 302 can be EPROM, FLASH or the like. The CPU 300 also utilizes RAM 306 through a bus 308 for local buffer storage and video decoding. The customer device 47 can also contain a local storage device (348) which may be made up of solid state memory, magnetic storage, optical storage, or any combination thereof, and is connected to CPU 300 over interface bus 374. The local storage device 348 may be used for any function requiring local storage, but would typically be used for storing commercials locally, so that the server would only periodically load up commercials, preferably during non-peak periods. The local storage device 348 may also be used to record/or buffer a stream of information to be viewed or listened to by a customer, so that it may later be time phase reproduced without connection to the system 10.

The customer device 47 is connected to the distributor equipment 16 using network or cable port 318 which in turn connects to line protocol encoder and decoder 314. The CPU 300 connects to the encoder/decoder 314 using line interface bus 316.

The customer device 47 may have one or more USB ports 328, which are connected to a USB controller 330. The USB ports 328 can be used for attaching a keyboard or any other USB device. The USB controller 330 is attached to CPU 300 over data bus 342. The customer device 47 may also have a smart card port 332 which is attached to Smart Card Interface 334, which in turn connects to CPU 300 over data bus 342. The Smart Card port 332 may be used for credit card payments for products and services, including any fees associated with the service provided by the customer device. For interfacing a customers own video equipment or other device, the customer device 47 may also contain one or more Firewire IEEE 1394 input ports 320 and output ports 322. Such ports may utilize the Firewire digital video (DV) protocol. The ports may also be used to upload any other type of digital information. Such DV ports are connected to digital video interface 324, which in turn connects to CPU 300 over DV bus 326. The input port 320 may be used for instance, to upload digital video (DV) from a camcorder to the RAM 306 or local storage device 348 for later viewing. It may also be transmitted for storage in the content provider equipment 16 for subsequent viewing at a later date. Other data and information, including audiovisual works may also be downloaded through the digital video output port 322.

An infrared (IR) interface port 340 can be used for a remote control 344 or a wireless keyboard 346 for controlling the customer device 47. The IR interface 340 is connected to CPU 300 over data bus 342. The IR interface 340 may also be used to upload or download any type of information or data, including audiovisual data encoded for infrared transmission. The customer device 47 also may include a Compact Flash, or Smart Flash card port 336, which is connected to a controller 338. The controller 338 is in turn be controlled by CPU 300 over data bus 342. A portable non-volatile ram device such as a Compact Flash or Smart Flash card may be read by the customer device 47 through memory card reader port 336. Photos and other information, including audiovisual information may also be uploaded or downloaded through the memory card reader port 336. Ultimately, any other suitable port through which audiovisual information and other data may pass can be incorporated into the customer device 47.

In order to output the video signals from the customer device 47, the CPU 300 would connect to video output converter 352 over video interface bus 350. The output from converter 352 would typically utilize standard commercially available connectors and protocols. These could include S-Video output 354, composite video 356, component video 358, and HDTV output 360.

In order to output the audio signals from the customer device 47, the CPU 300 would connect to digital audio output Interface 364, and analog audio output converter 368 using an audio data and control bus 362. The digital audio output Interface 364 will typically utilize standard commercially available connectors and protocols such as SPDIF for transmitting digital information through a port 366. In some cases the SPDIF digital output from port 366 would transmit encoded Surround Sound information. The analog audio output interface 368 converts the digital audio information into analog signals and could utilize standard commercially available connectors such as RCA or phonograph plugs for left channel 370 and right channel 372. It is also possible to output, transmit or transfer audio and or visual information or data by utilizing DV ports 320 and 322, USB ports 328, Smart Card port 332, Compact Flash port 336, or IR/wireless interface 340.

The customer device 47 can also contain a LCD, LED, or similar display 310. This display would be useful for showing the current status, current channel (2,5,7,9,etc.), current network (ABC, NBC, etc.), or other pertinent information. The display 310 is connected to CPU 300 using a display bus 312.

As can be seen, there is significant flexibility and many ways to implement the customer device 47. Since all operations are under control of the CPU 300, the entire functionality of the customer device can be changed with a program change to the ROM/FLASH 302. Since there are established communications between the system controller 30 and the CPU 300, any suitable program up-date can be downloaded from the distributor to the customer device 47 automatically.

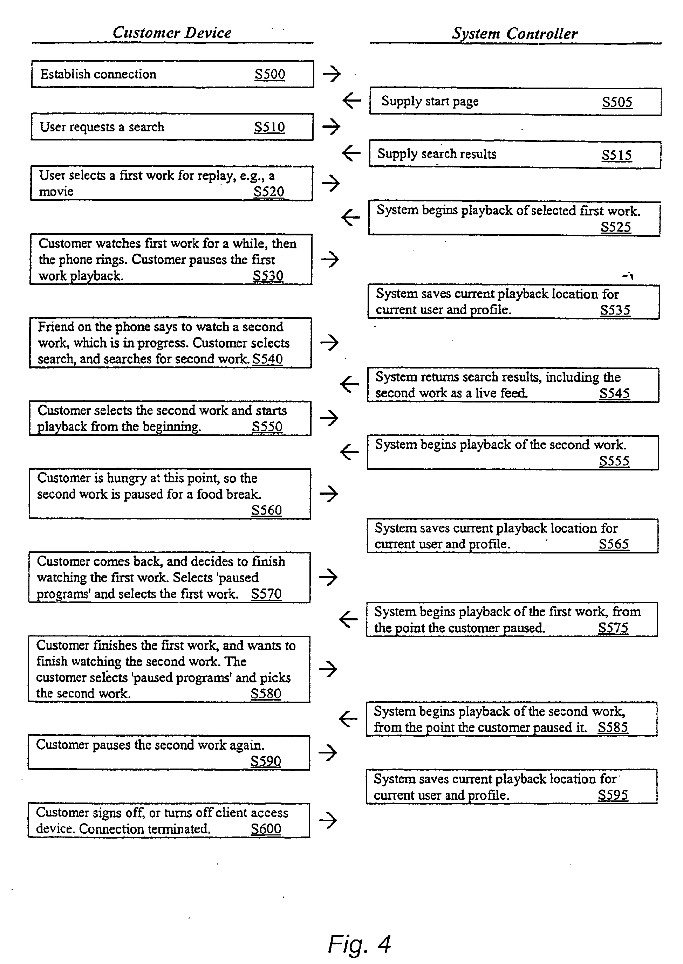

Fig. 4 is a chart, which describes the operation of the multimedia server system 10 from the customer's perspective, and the manner in which the system controller is programmed. When a customer or user 12 establishes a connection with the system 10 (S500) via the customer device 47, the request is routed through lines 32 to the system controller 30. The system controller 30 supplies a "Start" page to the customer 12 (S505), from which the user requests a search or makes a selection (S510).

When a search is requested, the controller 30 searches the entire database 54 or a section of the database using a suitable search engine and provides search results to the customer's device in a menu (S515), from which the user selects a first audio, video, or audiovisual work for replay on demand (S520). When a first work is selected, the system controller 30 begins playback of the selected work through a selected portal (S525).

The user can replay the entire work continuously, or pause the playback indefinitely (S530), or as limited by the distributor 16. In the event of a pause, the system saves the current playback location under the user profile (S535). Of course, the work can be paused prior to completing storage of the work, if desired.

When the first work is paused, the user can search for a second work (S540). The system again returns search results, which can include works, which are in progress (S545). If the second work is a work in progress (S550), the system can begin playback from the beginning of the second work (S555), if desired.

The second selected work can also be paused if desired (S560), causing the system to save that playback location for the customer, as well (S565). When the customer wants to continue reviewing one or more previously paused works, the customer can select the first work, for example, from a "paused program" menu (S570), and the controller 30 will play back the selected work from the location of the pause (S575).

When the first work is finished, the user can select the second paused program or another available program (S580), and complete that, as well (S585). The second work can be paused again (S590), if desired, and stored by the system controller (S595). At any time, the customer can sign off and terminate the connection (S600). However, the system can be programmed to disable sign off and other functions until commercial displays have been completed.

Any time during a viewing session, the user can select multiple items from a channel or other list and determine the order of reproduction of one or more items in the list. The user could also select a later time for reproduction, if desired.

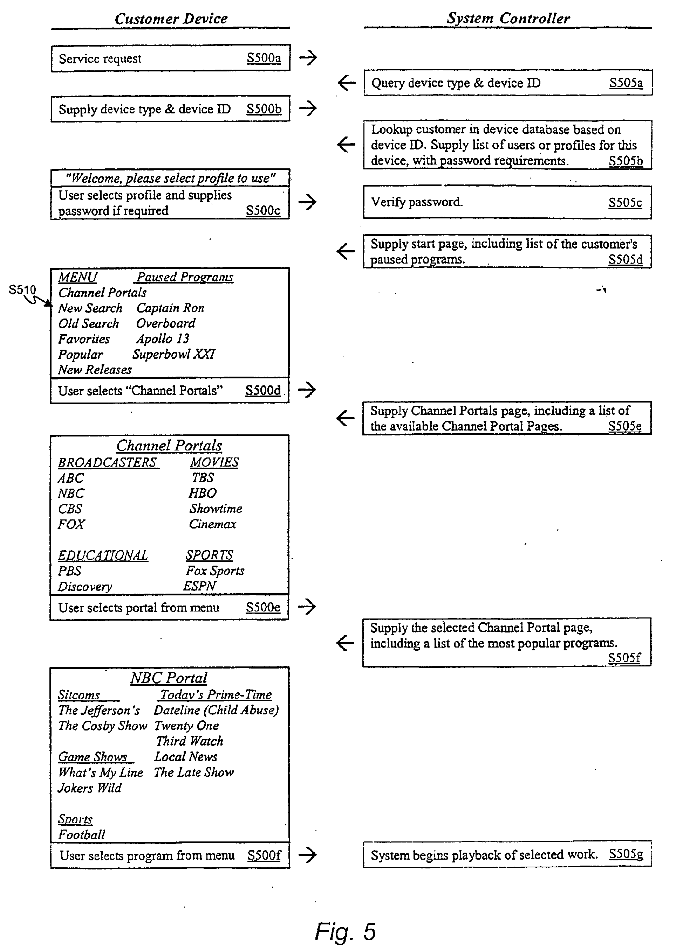

The manner in which a connection is established with the system controller (S500 and S505 in Fig. 4) is shown in greater detail in Fig. 5. When a service request is made (S500a), the system controller 30 responds by asking the client/customer device 47 for its device type and device ID (S505a), which are provided by the client/customer device (S500b). The system controller 30 then looks up the customer in the profile database 52 based on the device ID, and supplies a list of users or profiles for the device, with password requirements, if any (S505b). For example, a customer device 47 for a family of four might have four user profiles.

The user can be presented with an introductory message, such as "Welcome, please select profile to use", and a menu from which the user can select a profile such as a user name or the like and supplies a password can be supplied, if required (S500c).

The system controller verifies the password and supplies a "Start" page, which may include a list of the customers' paused programs and/or favorites (S505d). The "Start" page is displayed and the user selects an option from the menu on the start page (S500d). One method for selection of programs to be reproduced may be provided via a menu of channel portals (Fig. 5) S500e which is displayed via the customer device 47. One option is to select a new search (S510), or to choose a list of available programs from a particular channel portal, such as NBC®, ABC®, CNN®, ESPN® networks, etc. Each channel portal can represent the available content from a particular broadcaster or other content aggregator. It may be further organized by category, such as news, sports etc. The consumer can accesses channel portals through a master menu of channel portals displayed by the customer device 47. Once selected, the specific channel portal displays upcoming live broadcasts, pre-recorded programming and other programming available to the consumer through the system and date and time of availability.

The time, which the program is first available, is displayed if the program is a live broadcast or if the provider 16 determines the program may only be selected for reproduction after a certain time. Similarly, the last reproduction time, if any, is also displayed identifying the last time a program may be requested for reproduction. Each of these limitations can be set by the distributor 16 or other party who may control the viewing rights of the program. One option for local control as opposed to system control is that a parent, for instance, might program the customer device 47 to only allow certain programming to be viewed by their children. Thus, when the child logs into the customer device 47, only those shows which have been enabled by the parent can be viewed. A parent may also set total viewing time per day as well as well as times of day when viewing is enabled. These settings are stored in the profile database 52.

A separate custom channel portal may also be created which shows only those shows selected by a customer 12, 14. These selections are also stored in the profile database 52 for later recall.

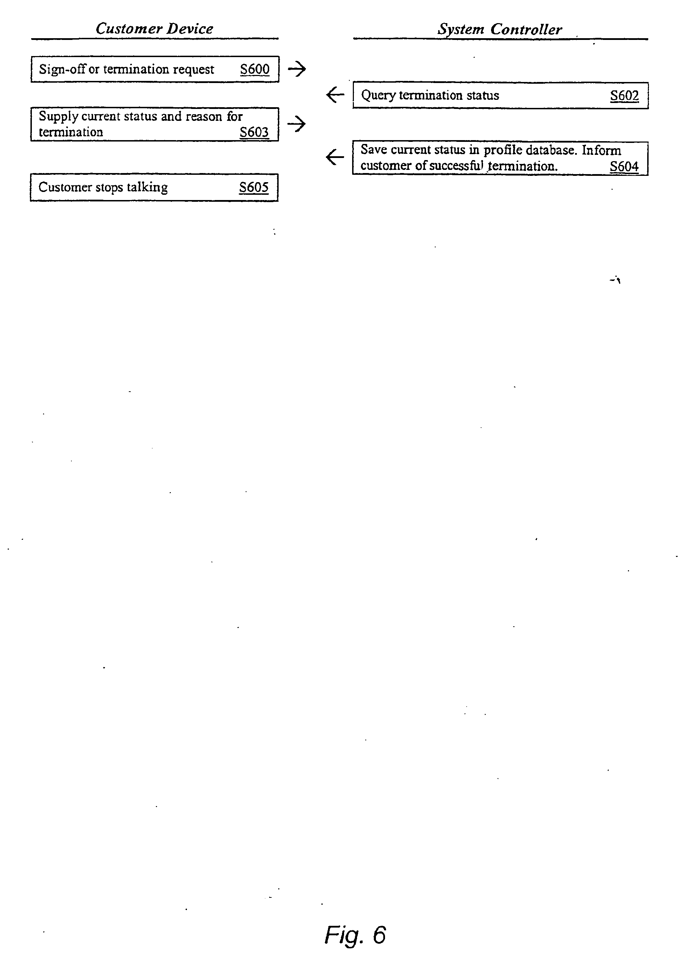

The sign off process is shown in greater detail in Fig. 6. The system can be programmed so that a session can be terminated by the user with a sign-off or termination request (S600). The system controller 30 can inquire as to the reason for the termination (S602), which could be a line drop out, a customer request, etc. The customer 47 device provides the current status and reason for termination (S603), if possible, which is saved in the device database under the users profile (S604). The customer may be informed of a successful termination and the connection is terminated (S605). The current status stored the device database includes information as to where the customer was in the playback of the work at termination.

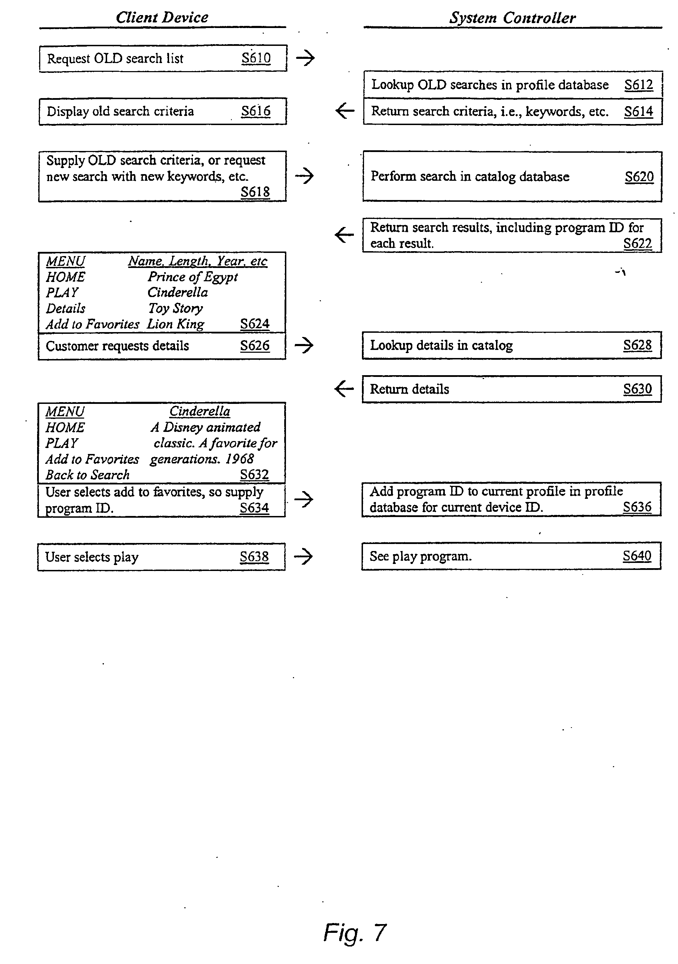

Old searches can be updated in the manner shown in Fig. 7 by requesting an old search list (S610). The system controller looks up old searches in the user's profile in the device database (S612), and returns search criteria such as key words, etc. (S614). The old search criteria are displayed to the customer (S616). The customer can supply the old search criteria to the system controller, in which case an old search would be updated, or request a new search with new key words, etc. (S618).

The system controller performs a search in the catalog database according to the criteria given by the customer (S620), and returns the search results, including program ID information for each result (S622). Program ID information can include title, length, release year, etc. Any suitable search engine may be integrated with the system controller for this purpose.

The results of the search are displayed (S624), and the customer can request details, if desired (S626). If the customer requests detail, the system controller looks up those details in its catalog (S628) and returns the results to the customer (S630).

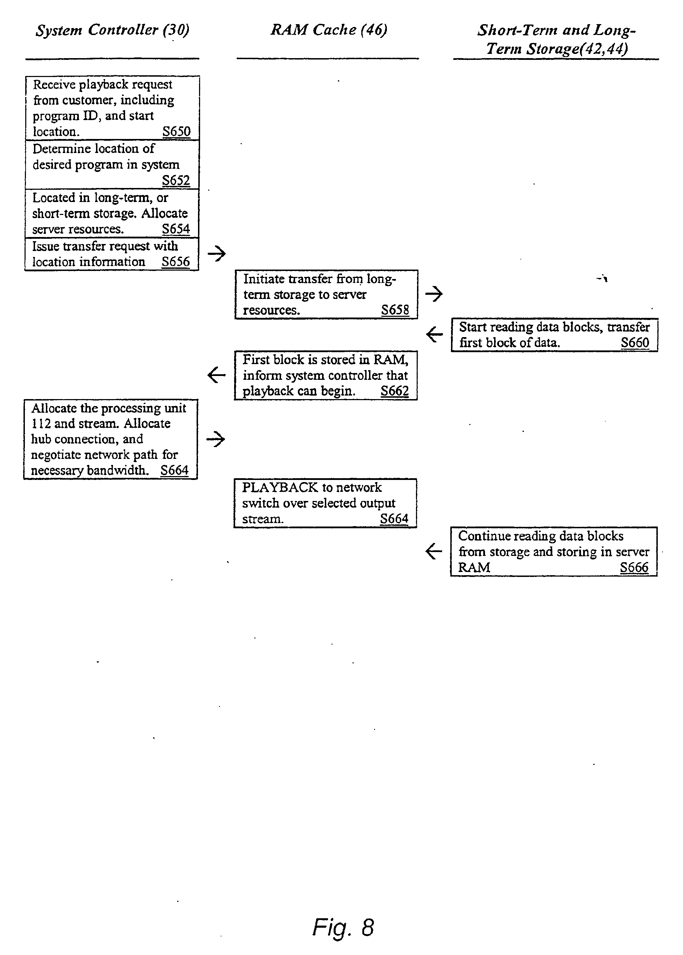

After display of the result (S632), the user can add to favorites, for example, in which case the customer device 47 provides program ID information to the system controller (S634). The system controller adds the program ID to the customer's profile in the device database (S636). When the user is satisfied, the user selects "Play" (S638), and the system controller proceeds to the program illustrated in Fig. 8 (S640).

The manner in which programs are replayed with advertisement insertion is shown in Fig. 8. When the system controller receives a playback request from a customer, which includes program ID information and a start location (S650), the system controller determines the location of the desired program in the system (S652). If the desired program is located in long term storage or short term storage, the system controller allocates server resources such as a storage processor 122, RAM 114, etc. (S654), and issues a transfer request with location information to the selected storage device (S656). Transfer from long term or short term storage to server resources is initiated (S658), the system starts reading data blocks in the short/long term storage device, and transfers the first block of data (S660). The first block of data is stored in RAM, and the system controller is informed that playback can begin (S662). It is not necessary to read and transfer the entire work before playback begins.

The system controller then allocates a processing unit 112 and output stream 38 or 40 along with a hub 26 or 28 connection, and thus negotiates a network path having the necessary bandwidth (S664). The network path can be a dedicated path for a single user, or a multicast path for multiple users. Playback begins over the selected output stream (S664). This process continues until the entire work is taken from short or long term storage (S666).

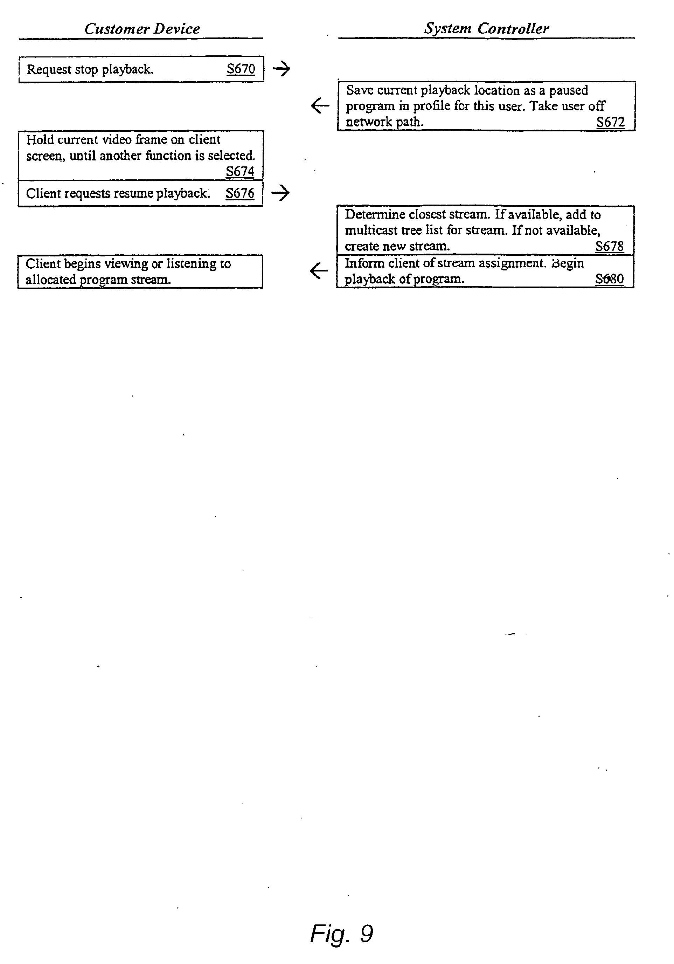

A customer can stop or pause a program in progress by requesting that the system stop playback (S670) (Fig. 9). The system controller saves the current playback location as a paused program in the profile for the user, and takes the customer off of the network path (S672). If desired, the customer device can hold the current video frame on the customer's screen until another function is selected (S674). A customer request to resume playback without returning to menus or the like will probably not be unusual (S676). When the client/customer requests that playback resume, the system controller searches for an existing stream, and if one is available and is close enough in time to the location at which the work was paused, adds the customer to a multicast tree list for that stream. If such a stream is not available, a new stream can be created (S678). The system controller informs the customer device 47 of the stream assignment, and begins playback of the program (S680), as described in Fig. 8.

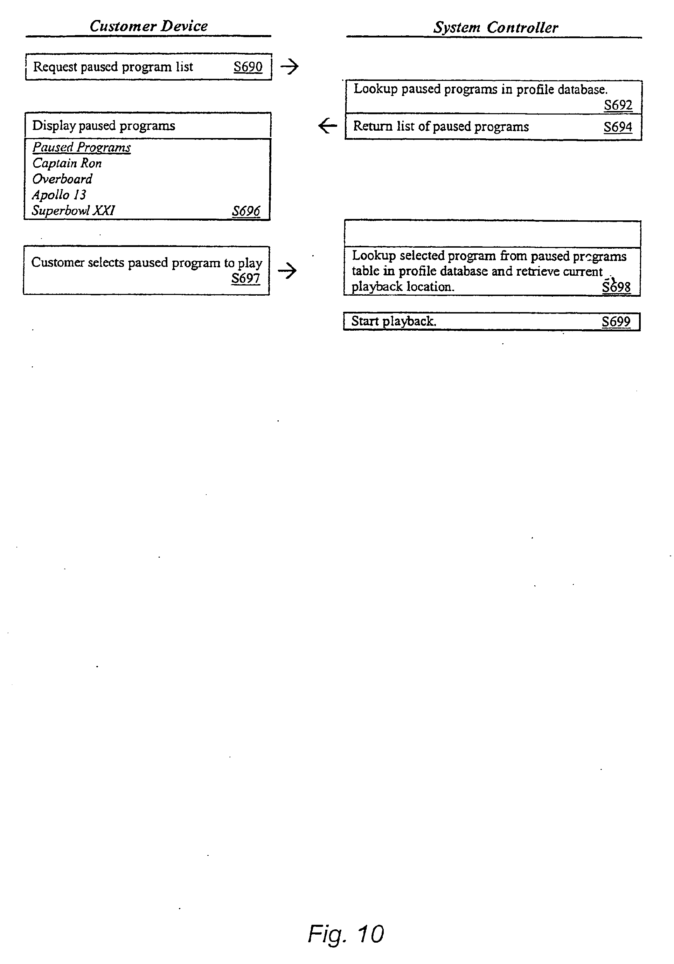

A previously paused program can be selected and play continued in the manner show in Fig. 10. A customer can request a paused program list (S690). The system controller looks up the paused programs in the profile database (S692) and returns a list of paused programs to the customer (S694). The paused programs are displayed (S696) and the customer selects a paused program to play (S697). The system controller then looks up the selected program from the Paused Program Table in the customer's profile, retrieves the current playback location (S698) and playback begins (S699). The stream is found in the manner previously described.

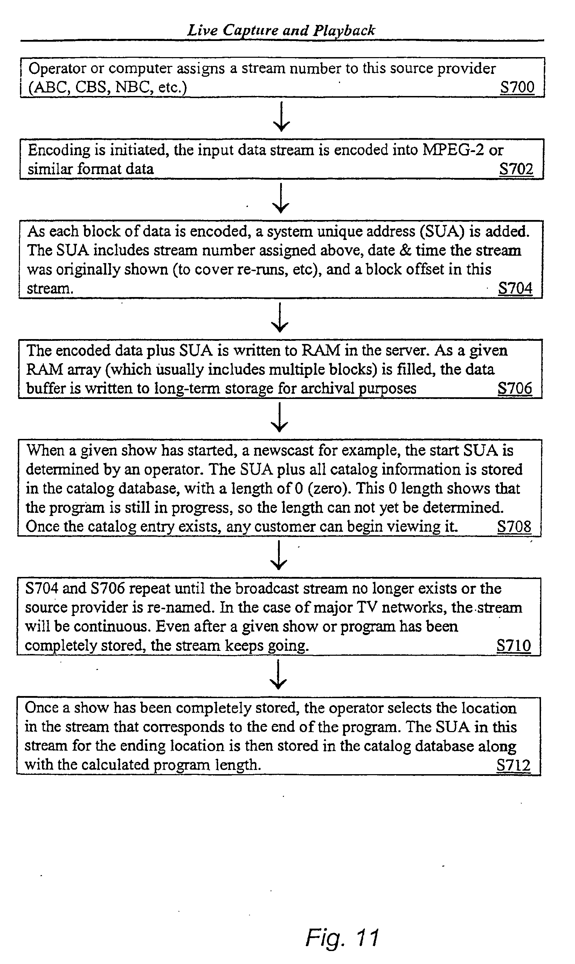

Incoming live stream capture and playback is shown in Fig. 11. A stream number is assigned to each source provider by an operator or computer (S700). A source provider could be a television network, a local broadcaster, a live news feed, a live sports feed, movie producer, etc. A source provider will often provide a program on suitable recorded media.

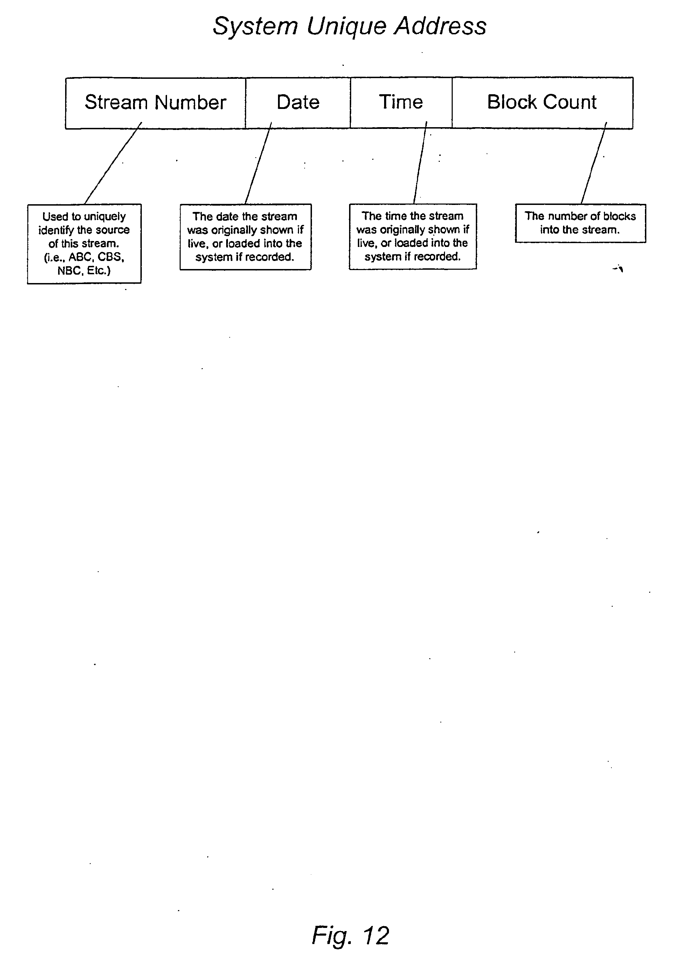

An input data stream is received, and encoding is initiated in the MPEG-2 format or the like (S702). As each block of data is encoded, a system unique address (SUA) is added. In Fig. 12, the SUA include the stream number, date and time the stream was originally shown, and a block count (S704 in Fig. 11). The SUA could contain additional or different information, if desired. The encoded data, including the assigned SUA, is written to RAM 46 in the distributor 16. As a given RAM array is filled, the data can be written to long term storage for archival purposes (S706).

When a given program has started, the start SUA is assigned by an operator or in some other manner, and the SUA plus all related catalog information is stored in the catalog database, with a length of zero (S708). The zero length indicates that the program is still in progress, and the total length has not yet been determined. Once this catalog entry is made, any customer can begin viewing it.

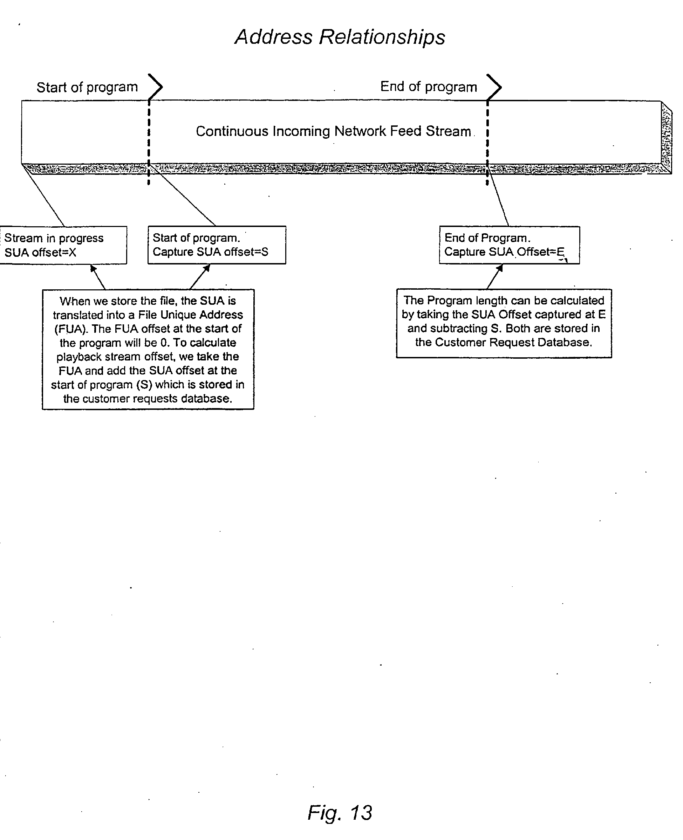

The encoding process continues until the broadcast stream stops (S710). However, the catalog information changes when a new program begins, as in the case of major television networks. As seen in Fig. 13, when a program has been completely stored, the location corresponding to the end of the program is identified, and the SUA for the ending location is stored in the catalog database, along with the program length, which can be calculated using the block count of Fig. 12 (S712 in Fig. 11).

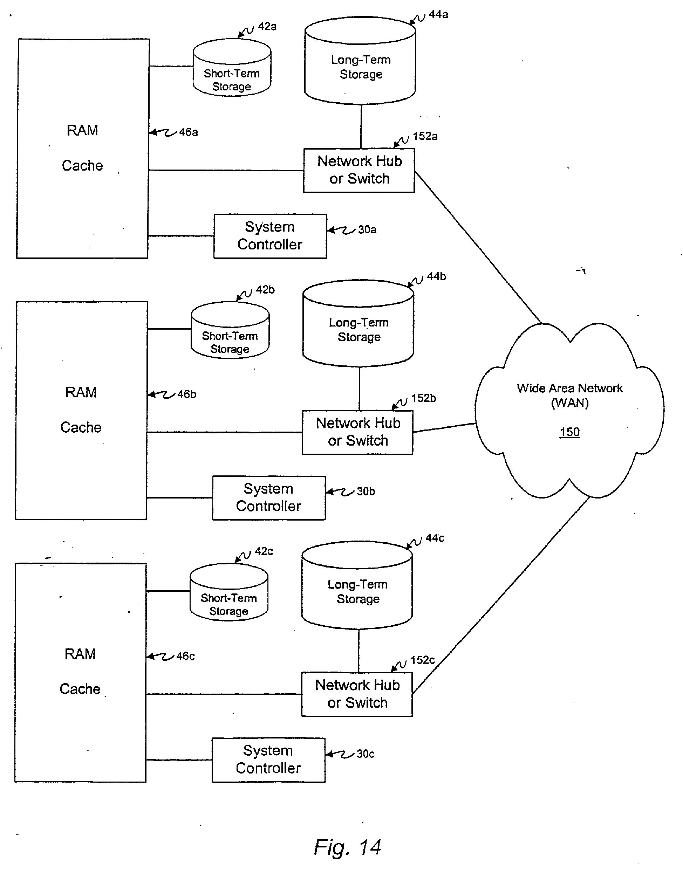

The content provider just described is typically a cable TV provider or the like located on a single site. However, multiple sites could be used in the system, in the manner shown in Fig. 14. A plurality of distributors 16 and content providers 14 can be connected to a wide area network (WAN) 150. Any number can be interconnected through the WAN 150, each system having its own RAM cache 46a...46n, short term storage 42a...42n, long term storage 44a...44n, a network hub or switch 152a...152n, and a system controller 30a...30n. In this manner, all customers 12, content providers 14 and distributors 16 can access a vast number of works.

Advertisement insertion can be accomplished in many ways, including the manner shown in Fig. 14. A start marker 200 can be inserted at the beginning of a program, commercial markers 202, 204 can be inserted at desired points in the program, and an end marker 206 can be used to identify the end of the program.

During the breaks between 202 and 204, any desired commercial 208 or multiple thereof can be inserted, including those which were originally shown. The commercials can be selected by the advertiser according to any suitable criteria, including demographic or other information in the customer profile. In this manner, customers, geographical areas, etc. can be targeted for commercials which are more likely to be appealing, producing more sales for advertisers.

The insertion points for advertisements are generally pre-established in the production of a program, and cannot be changed as a practical matter.

However, any desired number of commercials that are shown from that insertion point until the replay point of a particular program can be easily selected. Thus, the decision as to whether to insert a one-minute commercial, (4) thirty second commercials or five minutes of different commercials (each of variable length) can be made by the broadcaster. The broadcaster can also control the aggregate number of minutes that a view watching on demand programming sees in commercials spread in a particular viewing segment.

An algorithm calculates the aggregate number of minutes watched versus the number of commercials viewed. For instance, a consumer might watch for ten minutes and switch to another channel before the commercials are played. The user might also turn the system off without viewing the commercials. The number of minutes of commercials viewed on the second program, or when the system is turned back on, can be adjusted as desired by the broadcaster.

Another alternative is to prevent the consumer 12, 14 from switching channels while a commercial break is in progress, or delaying a request by a consumer 12, 14 until the commercial reproduction has been completed.

The method of advertising insertion can be accomplished in many ways. One such method is to combine the program with the advertising in the ram cache 46 or short term storage 42. Another method is to pause the broadcast of the program material at the ad insertion point, and substitute the broadcast stream for an advertising stream. Upon completion of the transmission of an advertisement or a series of advertisements, the transmission of the program is resumed.

An advertisement or a group of advertisements may also be stored in the customer device (47) in its local storage device (300) under a unique item address. These advertisements may be inserted when a commercial marker is recognized by the system, by switching the streams available for reproduction. The incoming program stream is paused until the completion of the commercial break and then resumed. Alternatively, the customer device may locally store the original program while the advertisement(s) is running, and time phase reproduce the original program when the advertising is complete, or it may send a resume command to the system controller 30 upon completion of the advertising.

The customer device 47 also has the ability to simultaneously display static advertisements such as Internet banner advertisements along with a selected program. Internet banner advertisements may be superimposed on the program being displayed or displayed via split screen and can be provided either by the local storage device 348, RAM storage 306, or transmitted from the short term storage 42 or near term storage 44.

The databases used by the system controller 30 will now be described.

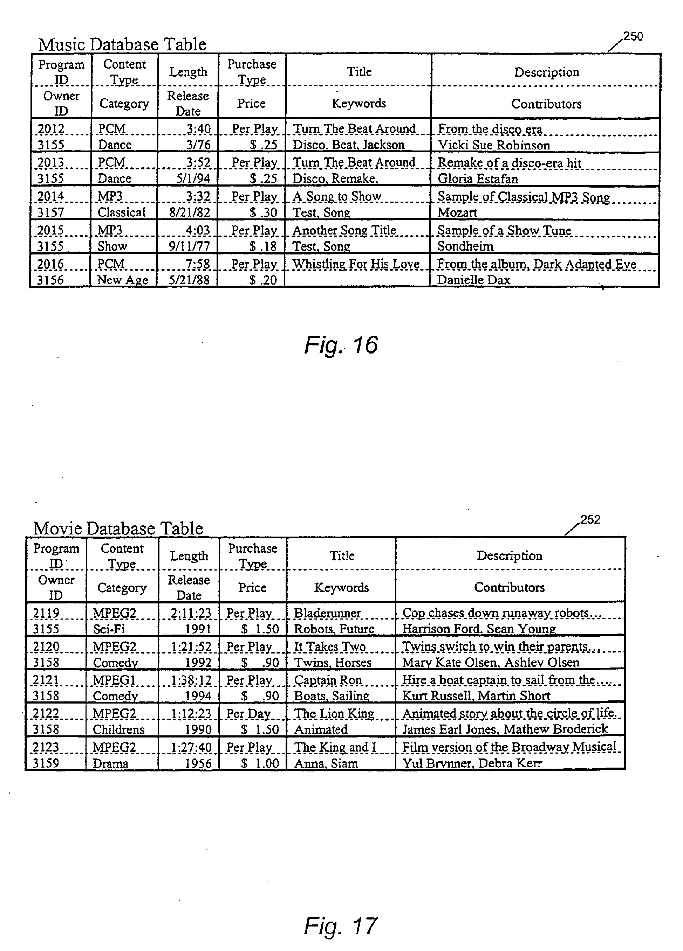

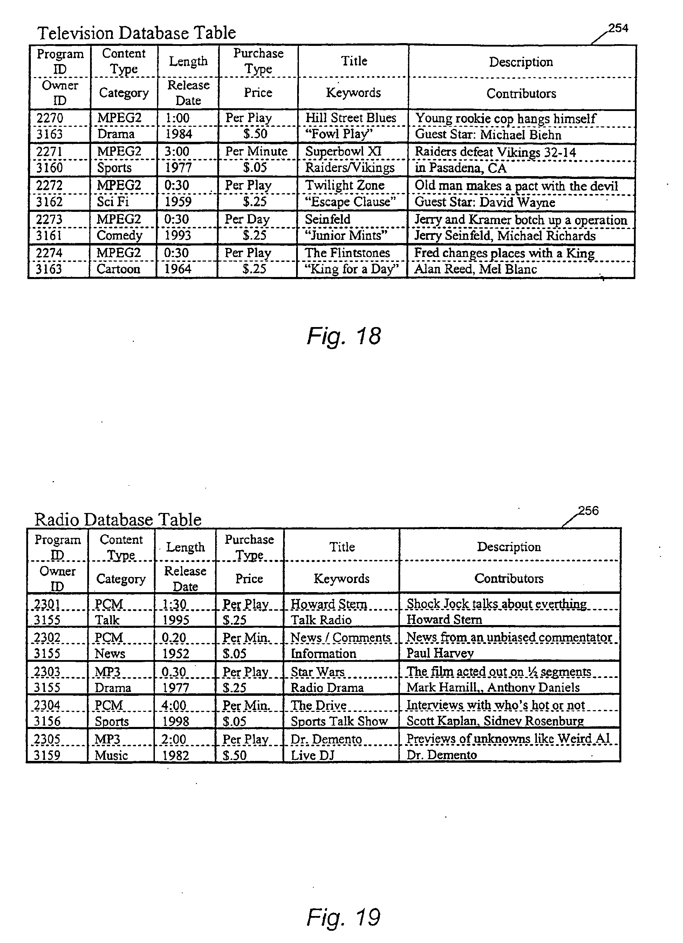

The catalog database 54 can include several tables, including a music database table 250 (Fig. 16), a movie database table 252 (Fig. 17), a television database table 254 (Fig. 18) and a radio database table 256 (Fig. 19).

The content of the database tables 250, 252, 254 and 256 are self-explanatory, so they will only be described briefly here. Generally, each database table includes information from which the program and the owner of the program can be identified. If desired, the content type and category can be included, as well as the length release date and release times. Price information, as well as the title, key words, demographic and psychographic information, general description and other relevant and useful information can also be included, as desired. The database tables include the information customers need to make selections, as well as information computer systems need to retrieve, playback and view the works. Charging information may also be included.

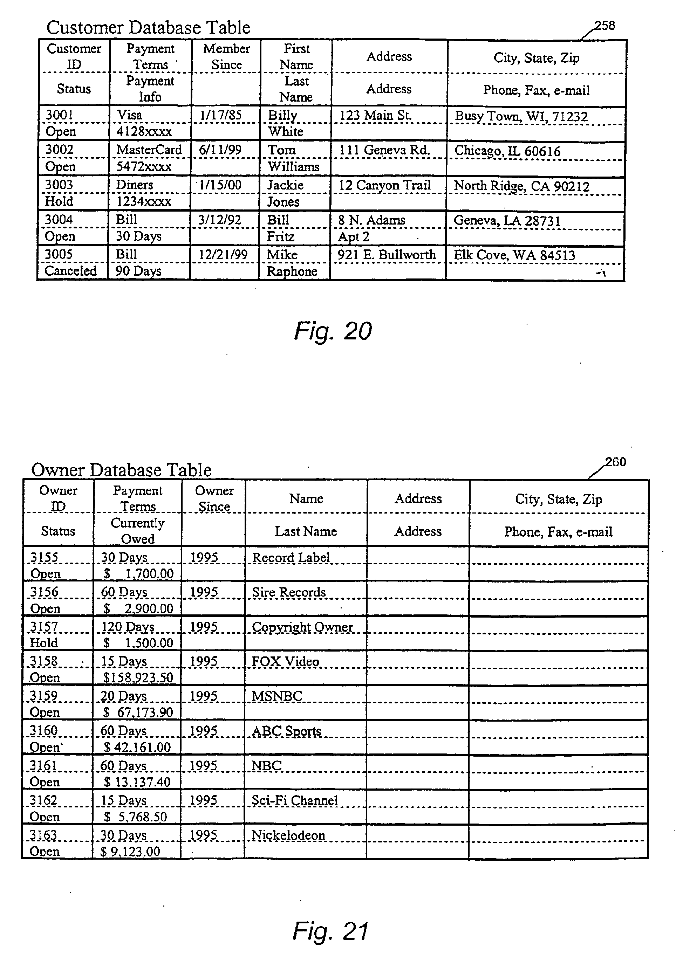

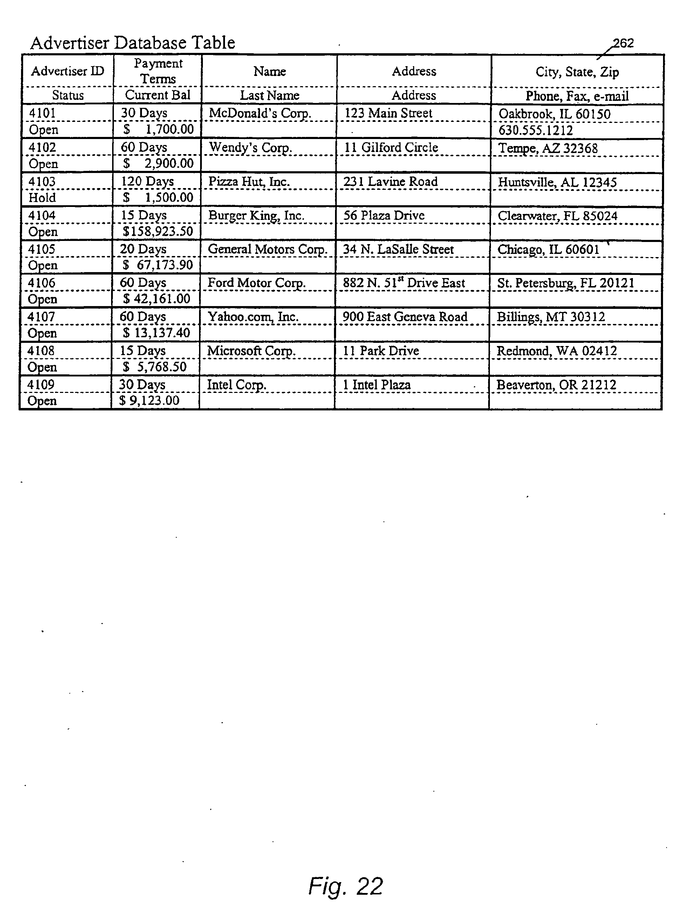

The billing database 50 can include a customer billing database table 258 (Fig. 20) and an owner royalty database table 260 (Fig. 21). An advertiser database table 262 (Fig. 22) can also be provided. The tables 258, 260, 262 generally include information sufficient to bill customers, bill advertisers and pay the owners of the reproduced works.

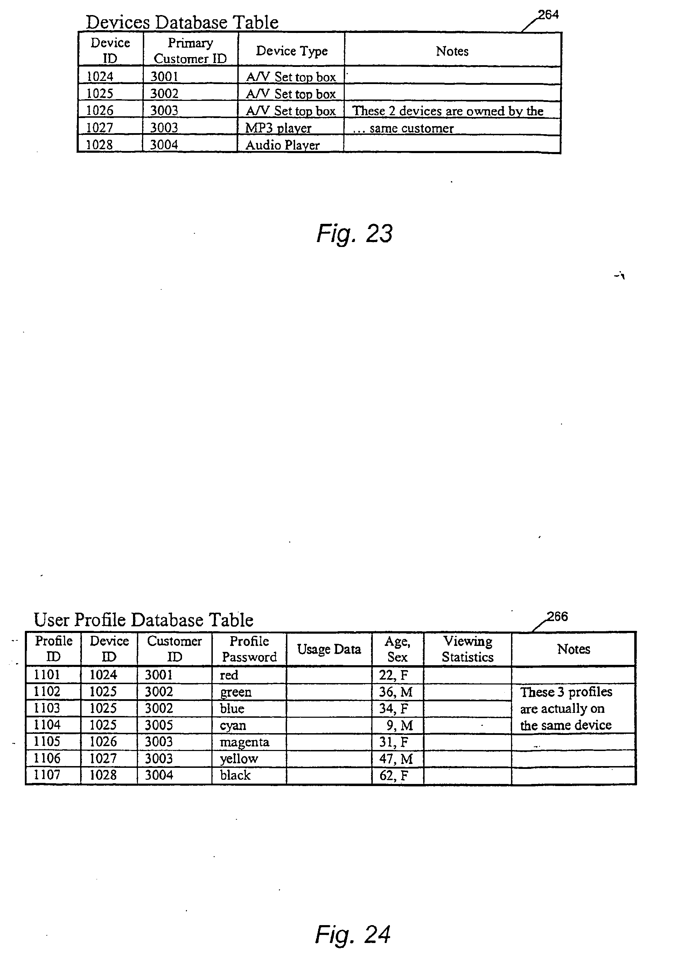

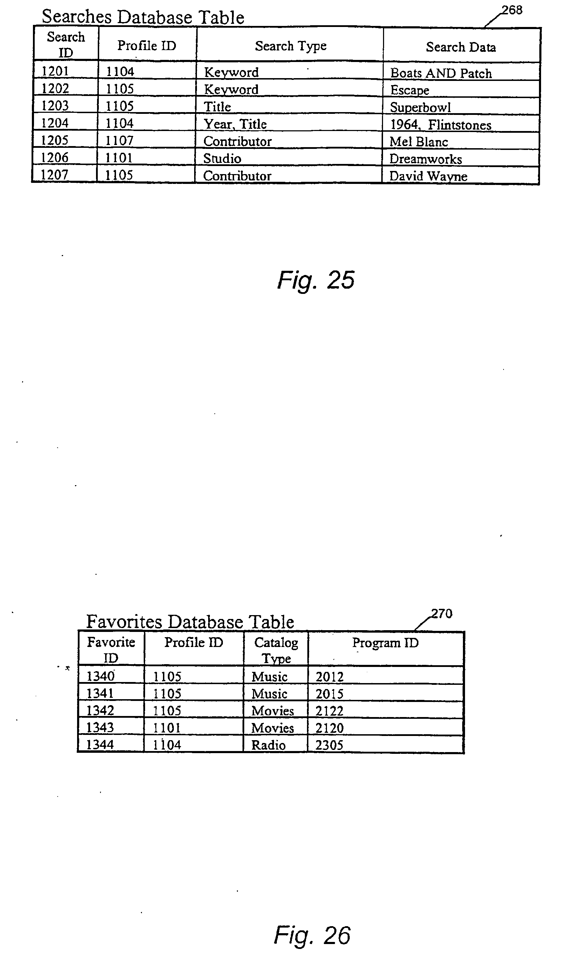

The customer profile database 52 can include, but is not limited to a plurality of database tables, such as a devices database table 264 (Fig. 23), a user profile database table 266 (Fig. 24), a searches database table 268 (Fig. 25) and a favorites database table 270 (Fig. 26). The user profile database table 266 can include information such as passwords, and it can also include information of interest to advertisers, such as age, lifestyle, etc.

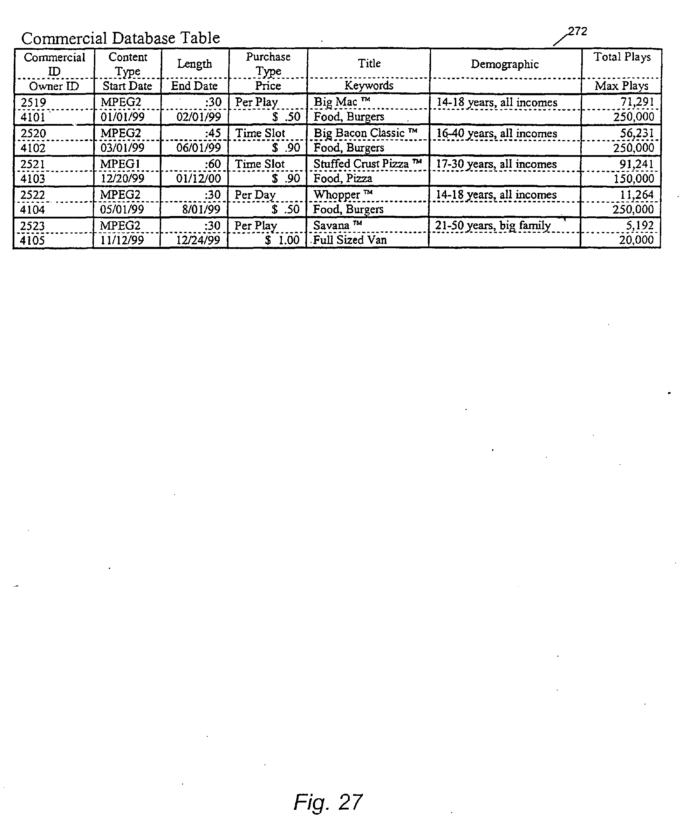

A commercial database table 272 (Fig. 27) in the advertising database 56 is used to select the commercials to be shown. It is particularly helpful in targeting advertising.

The content provider can select and insert advertising based on requests of advertisers. The user could also select advertisements from the advertising database, to view advertisements of interest to the user. The user could be presented with a menu of products or product groupings and select a product of interest, and view advertisements for that product.

In use, the system controller 30 processes all audiovisual works received through the network feed reception 18 through its RAM cache server system 46, and continuously stores the program material in either the short term storage device 42, or in long term permanent storage 44. If a customer requests a live broadcast, the live broadcast is routed to that customer through a selected portal in the cable TV stream switch 26.

Original broadcasts, which are expected to be very popular, are initially stored in the RAM cache server system 46. If a customer requests the program while it is still in progress, the system controller 30 can reproduce the work from the beginning, by playing it back from the RAM cache server system 46. If desired, the original broadcast can be temporarily stored in short term storage 42, or even long term storage 44, preferably after the original viewing is complete. In either case, the system controller can reproduce the work from the beginning, even when the original broadcast is still in progress.

As the works are reproduced, the system controller 30 can insert advertisements in accordance with information stored in the advertising database 56. The original advertisements can be retrieved and played back, new advertisements can be inserted into the work, or advertisements can be eliminated altogether, as desired.

The many advantages of the invention are now apparent. The present invention can stream a virtually unlimited number of audiovisual works because the RAM in which the works are stored is local and is directly accessible to the output channels. The works can be produced while the original work is still in progress. The size of the library of works can be very large. Moreover, the cost is relatively low if long term storage is a magnetic tape-based system or the like instead of hard drives, which is possible because the RAM cache server system is large. Furthermore, advertisements can be changed and targeted when works are reproduced. The term viewing may equally apply to the listening of audio works, the viewing of visual works, or works which are both audio and video in nature.

While the principles of the invention have been described above in connection with a specific apparatus and applications, it is to be understood that this description is made only by way of example and not as a limitation on the scope of the invention.

Other aspects of the invention provide computer programs and/or operating programs which, when run on a computer or other program-controlled device, cause the computer or device to carry out methods embodying the invention or to become apparatus embodying the invention.

## Claims

1. A method of recording video and/or audio programs and reproducing said programs on demand, said method comprising the steps of:
reproducing source signals,
encoding (S702) said source signals for storage in a storage device (46, 42, 44),
identifying (S704) said source signals under unique item addresses,
storing (S708) the unique item addresses in a database (54),
storing (S706) said encoded source signals in a storage device (46, 42, 44) for subsequent retrieval,
creating (S620) a menu of items from said unique item addresses stored in said database,
transmitting (S622) the menu of items over a network to a customer device (47),
displaying (S624) said menu of items,
selecting (S638) one or more of said displayed items from a customer device for reproduction,
reproducing (S650-S662) said encoded source signals corresponding to said selected item,
transmitting (S664, S666) said reproduced encoded source signals over a network to the customer device, and
reproducing said encoded source signals from said customer device for playback in either an audio and/or video format;
**characterised in that**, during the course of storing said encoded source signals for a program in said storage device, the encoded source signals for that program are reproduced and transmitted to said customer device.

2. The method of claim 1, wherein, when creating said menu, an item corresponding to a program for which the source signals have not yet been completely encoded and stored is included in the menu.

3. The method of claim 1 or 2 further comprising the step of reproducing and transmitting said encoded source signals prior to storing the entire program in said storage device.

4. The method of claim 1, 2 or 3 further comprising the step (S530; S670) of remotely pausing the reproduction and transmission of said encoded source signals.

5. The method of Claim 4 further comprising the step of allowing a user of a customer device to remotely pause the reproduction and transmission of said encoded source signals prior to completing the storage of said encoded source signals in said storage device.

6. The method of any one of claims 1 to 5, further comprising receiving (S530-S590; S690, S697) from a user of the customer device, who is currently playing back and viewing source signals for at least one program, commands with respect to the source signals for the program or programs concerned for the purposes of controlling transmission of those source signals to the customer device.

7. The method of any preceding claim, comprising the steps of:
encoding the source signals for prerecorded first program content at predetermined times (202) for insertion of selected second program content (208) during the reproduction of the first program content;
reproducing the first program content;
stopping the reproduction of the first program content for insertion of the second program content;
reproducing the second program content; and
continuing reproduction of the first program content,
wherein the first program content is reproduced in response to a command from a user of said customer device, and the second program content is selected according to a profile (266) for that user.

8. The method of any preceding claim further comprising the step of inserting video and/or audio advertisements (208) into selected locations of said encoded source signals.

9. The method of Claim 8 further comprising the step of creating a database (272) which contains audio and/or video advertisements.

10. The method of Claim 9 further comprising the step of inserting said advertisements into said stored or reproduced encoded source signals.

11. The method of Claim 10 further comprising the step of inserting said advertisements based upon pre-determined criterion developed from personal profile of the user of a customer device.

12. The method of Claim 11 further comprising the step of determining the user of the customer device by allowing the user of the customer device to select his/her personal profile (S500c) when using the customer device.

13. The method of any preceding claim further comprising the step of selecting (S500e) a channel portal, said channel portal displaying a menu of items which are available for reproduction through said customer device and which correspond to said encoded source signals stored in said storage device.

14. The method of any preceding claim further comprising the step of providing a search engine which is accessible through said customer device, that allows a user to conduct a search of two or more items in said database.

15. The method of any preceding claim further comprising a database of keywords (250, 252, 254, 256) which identify relevant information relating to said encoded source signals stored in said storage device.

16. The method of Claim 14 further comprising the step (S624) of displaying the results of said search by said customer device.

17. The method of Claim 16 further comprising the step (S638) of selecting an item from the results of said search for reproduction through said customer device.

18. The method of Claim 13 further comprising the step of selecting an item corresponding to said encoded source signals for reproduction through said customer device.

19. The method of Claim 16 further comprising the step of selecting multiple items from the results of said search and determining the order of reproduction.

20. The method of Claim 13 further comprising the step of selecting multiple items and determining the order of reproduction .

21. The method of Claim 13 further comprising the step of selecting the time of reproduction of said selected items for reproduction.

22. The method of Claim 20 further comprising the step of selecting the time of reproduction of said selected items.

23. The method of any preceding claim further comprising the step of storing said encoded source signals in a long term storage device (44) and transferring said source signals to a short term storage device (42) prior to being reproduced and transmitted to said customer device.

24. The method of Claim 23 further comprising the step of transferring said encoded source signals from said long term storage device (44a-c) over a wide area network (150) to said short term storage device (42a-c).

25. The method of Claim 23 further comprising the step of transferring said encoded source signals stored in said short term storage device (42) to a ram array storage device (114) for reproduction to said customer device.

26. The method of any preceding claim further comprising the step of storing said encoded source signals in a long term storage device (44) and transferring said encoded source signals to a ram array storage device (114) prior to being reproduced to said customer device.

27. The method of Claim 26 further comprising the step of transferring said encoded source signals from said long term storage device (44a-c) over a wide area network (150) to said ram array storage device (114).

28. The method of any preceding claim further comprising the step of storing said encoded source signals in a short term storage device (42) and transferring said source information to a ram array storage device (114) prior to being reproduced to said customer device.

29. The method of Claim 28 further comprising the step of transferring said encoded source signals from said long term storage device (44) over a wide area network (150) to said ram array storage device (114).

30. The method of any preceding claim further comprising the step of storing commercials in a storage device for insertion at pre-determined points (202) into said reproduced encoded source signals prior to transmission to a customer device.

31. The method of Claim 30 further comprising the step of substituting the reproduction and transmission of said selected encoded source signals with the reproduction and transmission of said commercials stored in said database to said customer device.

32. The method of any preceding claim further comprising the step of storing commercials in said customer device (47).

33. The method of Claim 32 further comprising the step of reproducing said commercials stored in said customer device at pre-determined points, by substituting said transmitted encoded source signals with said commercials stored in said customer device.

34. The method of any preceding claim further comprising the step of transmitting specific commercials to a customer device for local storage therein, based upon personal information supplied by a user.

35. The method of any preceding claim further comprising the step of inserting commercials into said encoded source signals as they are being stored in said storage device.

36. The method of Claim 10 further comprising the step of inserting said advertisements based upon preferences chosen by a particular user of a customer device.

37. The method of any preceding claim further comprising the step of presenting a menu of specific advertisers and allowing the user to select the advertisers, so that advertisements from said selected advertisers may be inserted into said stored or reproduced encoded source signals.

38. The method of any preceding claim further comprising the step of presenting a menu of specific products to the user through the customer device and allowing a customer to select said products so that advertisements for said selected products may be inserted into said stored or reproduced encoded source signals.

39. The method of any preceding claim further comprising the step of presenting a menu of specific groupings of products by categories to the user through the customer device and allowing the user to select categories of products so that advertisements which correspond to said selected categories may be inserted into said encoded source signals prior to being reproduced by said customer device.

40. The method of any preceding claim further comprising the step (S700-S712) of capturing live broadcasts as they are broadcast and encoding them for storage in said storage device.

41. Apparatus for recording video and/or audio programs and reproducing said programs on demand, the apparatus (10) comprising:
means (18, 20, 22) for reproducing source signals,
means (120) for encoding said source signals for storage in a storage device,
means for identifying said source signals under unique item addresses,
means (30, 48) for storing the unique item addresses in a database (54),
means (30) for storing said encoded source signals in a storage device (46, 42, 44) for subsequent retrieval,
means (30) for creating a menu of items from said unique item addresses stored in said database,
means (3 8, 40) for transmitting the menu of items over a network to a customer device (47),
means (47a) for displaying said menu of items,
means for selecting one or more of said displayed items from a customer device for reproduction,
means (30) for reproducing said encoded source signals corresponding to said selected item,
means (38, 40) for transmitting said reproduced encoded source signals over a network to the customer device, and
means for reproducing said encoded source signals from said customer device for playback in either an audio and/or video format;
**characterised in that** the means (30, 38, 40) for reproducing and transmitting the encoded source signals are operable, during the course of storing by the source signals storing means of said encoded source signals for a program in said storage device, to reproduce and transmit to said customer device the encoded source signals for that program.

42. The apparatus of claim 41, comprising:
means for encoding the source signals for prerecorded first program content at predetermined times for insertion of selected second program content during the reproduction of the first program content;
means for reproducing the first program content;
means for stopping the reproduction of the first program content for insertion of the second program content;
means for reproducing the second program content; and
means for continuing reproduction of the first program content,
wherein the first program content is reproduced in response to a command from a user of said customer device, and the second program content is selected according to a profile for that user.

43. Apparatus as claimed in claim 41 or 42, adapted to simultaneously distribute a plurality of said encoded source signals from a plurality of sources to a plurality of users, comprising:
a plurality of input/output stream modules (100) connected in parallel to a backplane (104), and
at least one storage module (102) connected to said backplane,
said input/output stream modules having a plurality of input/output access processing units (112), and a random access memory (114),
said random access memory being connected to said backplane and said input/output access processing units being connected to said random access memory, said random access memory being capable of reproducing at least 2 streams of audiovisual data,
said storage module having a bus arbitrator connected to said backplane and a plurality of storage access processing units connected to said bus arbitrator.

44. Apparatus as claimed in claim 41, 42 or 43, adapted to simultaneously distribute a plurality of said encoded source signals from a plurality of sources to a plurality of users, comprising:
a RAM cache server system (46a-c), said source signals being at least temporarily stored in said RAM cache server system,
a plurality of stream switches (152a-c) connected between said RAM cache server system and the users, selected source signals being sent to one or more of the users through said stream switches on demand,
short term signal storage (42a-c) connected to said RAM cache server system,
long term signal storage (44a-c) connected to said RAM cache server system, said one or more users being able to demand information signals stored in said RAM cache server system, said short term storage or said long term storage through a system controller (30a-c),
said system controller locating said selected stored source signals in said RAM cache server system,
said short term storage or said long term storage, causing said selected stored source signals to be retrieved and reproduced for said users,
said system controller making a record of said reproduction for billing purposes with respect to said users and payment purposes with respect to said sources as needed,
said system controller inserting selected advertisements into said reproduction for predetermined times at predetermined intervals, and making a record of said advertisement insertion.

45. The apparatus of claim 44, wherein said advertisements are selected according to user profiles (266).

## Patentansprüche

1. Verfahren zum Aufzeichnen von Video- und/oder Audioprogrammen und Wiedergeben der Programme auf Wunsch, wobei das Verfahren die Schritte umfasst:
Wiedergeben von Quellsignalen,
Codieren (S702) der Quellsignale zum Speichern in einer Speichervorrichtung (46, 42, 44),
Identifizieren (S704) der Quellsignale unter eindeutigen Elementadressen,
Speichern (S708) der eindeutigen Elementadressen in einer Datenbank (54),
Speichern (S706) der kodierten Quellsignale in einer Speichervorrichtung (46, 42, 44) für ein anschließendes Abrufen,
Erzeugen (S620) eines Elementemenüs aus den in der Datenbank gespeicherten eindeutigen Elementadressen,
Übermitteln (S622) des Elementemenüs über ein Netzwerk an eine Kundenvorrichtung (47),
Anzeigen (S624) des Elementemenüs,
Auswählen (S638) eines oder mehrerer der angezeigten Elemente aus einer Kundenvorrichtung für eine Wiedergabe,
Wiedergeben (S650-S662) der kodierten Quellsignale, die dem ausgewählten Element entsprechen,
Übermitteln (S664, S666) der wiedergegebenen kodierten Quellsignale über ein Netzwerk an die Kundenvorrichtung, und
Wiedergeben der kodierten Quellsignale von der Kundenvorrichtung zum Abspielen in entweder einem Audio- und/oder einem Videoformat;
**dadurch gekennzeichnet, dass** im Verlauf des Speicherns der kodierten Quellsignale für ein Programm in der Speichervorrichtung die kodierten Quellsignale für dieses Programm wiedergegeben und an die Kundenvorrichtung übermittelt werden.

2. Verfahren nach Anspruch 1, wobei beim Erzeugen des Menüs ein Element in das Menü aufgenommen wird, das einem Programm entspricht, für das die Quellsignale noch nicht vollständig kodiert und gespeichert wurden.

3. Verfahren nach Anspruch 1 oder 2, ferner umfassend den Schritt des Wiedergebens und Übermittelns der kodierten Quellsignale vor dem Speichern des gesamten Programms in der Speichervorrichtung.

4. Verfahren nach Anspruch 1, 2 oder 3, ferner umfassend den Schritt (S530; S670) des Unterbrechens aus der Ferne der Wiedergabe und Übermittlung der kodierten Quellsignale.

5. Verfahren nach Anspruch 4, ferner umfassend den Schritt des Erlaubens, dass ein Nutzer einer Kundenvorrichtung die Wiedergabe und Übermittlung der kodierten Quellsignale vor Beendigung des Speicherns der kodierten Quellsignale in der Speichervorrichtung aus der Ferne unterbricht.

6. Verfahren nach irgendeinem der Ansprüche 1 bis 5, ferner umfassend das Empfangen (S530-S590; S690, S697) von einem Nutzer der Kundenvorrichtung, der momentan Quellsignale für mindestens ein Programm abspielt und ansieht, von Befehlen bezüglich der Quellsignale für das oder die betreffende(n) Programm(e) zum Zwecke des Steuerns der Übermittlung dieser Quellsignale an die Kundenvorrichtung.

7. Verfahren nach irgendeinem vorangehenden Anspruch, umfassend die Schritte:
Kodieren der Quellsignale für einen voraufgezeichneten ersten Programminhalt zu vorbestimmten Zeitpunkten (202) zum Einfügen eines ausgewählten zweiten Programminhalts (208) während der Wiedergabe des ersten Programminhalts;
Wiedergeben des ersten Programminhalts;
Anhalten der Wiedergabe des ersten Programminhalts zum Einfügen des zweiten Programminhalts;
Wiedergeben des zweiten Programminhalts; und
Fortsetzen der Wiedergabe des ersten Programminhalts,
wobei der erste Programminhalt als Reaktion auf einen Befehl eines Nutzers der Kundenvorrichtung wiedergegeben wird und der zweite Programminhalt in Übereinstimmung mit einem Profil (266) für diesen Nutzer ausgewählt wird.

8. Verfahren nach irgendeinem vorangehenden Anspruch, ferner umfassend den Schritt des Einfügens von Video- und/oder Audiowerbung (208) an ausgewählten Orten der kodierten Quellsignale.

9. Verfahren nach Anspruch 8, ferner umfassend den Schritt des Erzeugens einer Datenbank (272), die Audio- und/oder Videowerbung enthält.

10. Verfahren nach Anspruch 9, ferner umfassend den Schritt des Einfügens der Werbung in die gespeicherten oder wiedergegebenen kodierten Quellsignale.

11. Verfahren nach Anspruch 10, ferner umfassend den Schritt des Einfügens der Werbung basierend auf vorbestimmten Kriterien, die aus dem persönlichen Profil des Nutzers einer Kundenvorrichtung entwickelt wurden.

12. Verfahren nach Anspruch 11, ferner umfassend den Schritt des Bestimmens des Nutzers der Kundenvorrichtung durch Erlauben, dass der Nutzer der Kundenvorrichtung beim Verwenden der Kundenvorrichtung sein persönliches Profil (S500c) auswählt.

13. Verfahren nach irgendeinem vorangehenden Anspruch, ferner umfassend den Schritt des Auswählens (S500e) eines Kanalportals, wobei das Kanalportal ein Menü der Elemente anzeigt, die für eine Wiedergabe durch die Kundenvorrichtung verfügbar sind und die den kodierten, in der Speichervorrichtung gespeicherten Quellsignalen entsprechen.

14. Verfahren nach irgendeinem vorangehenden Anspruch, ferner umfassend den Schritt des Bereitstellens einer Suchmaschine, auf die mit der Kundenvorrichtung zugegriffen werden kann und die es einem Nutzer erlaubt, eine Suche nach zwei oder mehr Elementen in der Datenbank durchzuführen.

15. Verfahren nach irgendeinem vorangehenden Anspruch, ferner umfassend eine Datenbank mit Schlüsselwörtern (250, 252, 254, 256), die relevante Informationen zu den in der Speichervorrichtung gespeicherten kodierten Quellsignalen identifizieren.

16. Verfahren nach Anspruch 14, ferner umfassend den Schritt (S624) des Anzeigens der Suchergebnisse durch die Kundenvorrichtung.

17. Verfahren nach Anspruch 16, ferner umfassend den Schritt (S638) des Auswählens eines Elements aus den Suchergebnissen für eine Wiedergabe durch die Kundenvorrichtung.

18. Verfahren nach Anspruch 13, ferner umfassend den Schritt des Auswählens eines Elements, das den gespeicherten kodierten Quellsignalen entspricht, für eine Wiedergabe durch die Kundenvorrichtung.

19. Verfahren nach Anspruch 16, ferner umfassend den Schritt des Auswählens mehrerer Elemente aus den Suchergebnissen und des Bestimmens der Wiedergabereihenfolge.

20. Verfahren nach Anspruch 13, ferner umfassend den Schritt des Auswählens mehrerer Elemente und des Bestimmens der Wiedergabereihenfolge.

21. Verfahren nach Anspruch 13, ferner umfassend den Schritt des Auswählens des Wiedergabezeitpunkts der ausgewählten Elemente für eine Wiedergabe.

22. Verfahren nach Anspruch 20, ferner umfassend den Schritt des Auswählens des Wiedergabezeitpunkts der ausgewählten Elemente.

23. Verfahren nach irgendeinem vorangehenden Anspruch, ferner umfassend den Schritt des Speicherns der kodierten Quellsignale in einer Langzeitspeichervorrichtung (44) und des Übertragens der Quellsignale an eine Kurzzeitspeichervorrichtung (42), bevor sie wiedergegeben und an die Kundenvorrichtung übermittelt werden.

24. Verfahren nach Anspruch 23, ferner umfassend den Schritt des Übertragens der kodierten Quellsignale von der Langzeitspeichervorrichtung (44a-c) über ein Weitverkehrsnetz (150) an die Kurzzeitspeichervorrichtung (42a-c).

25. Verfahren nach Anspruch 23, ferner umfassend den Schritt des Übertragens der in der Kurzzeitspeichervorrichtung (42) gespeicherten kodierten Quellsignale an eine RAM-Anordnungs-Speichervorrichtung (114) für eine Wiedergabe auf der Kundenvorrichtung.

26. Verfahren nach irgendeinem vorangehenden Anspruch, ferner umfassend den Schritt des Speicherns der kodierten Quellsignale in einer Langzeitspeichervorrichtung (44) und des Übertragens der kodierten Quellsignale an eine RAM-Anordnungs-Speichervorrichtung (114), bevor sie auf der Kundenvorrichtung wiedergegeben werden.

27. Verfahren nach Anspruch 26, ferner umfassend den Schritt des Übertragens der kodierten Quellsignale von der Langzeitspeichervorrichtung (44a-c) über ein Weitverkehrsnetz (150) an die RAM-Anordnungs-Speichervorrichtung (114).

28. Verfahren nach irgendeinem vorangehenden Anspruch, ferner umfassend den Schritt des Speicherns der kodierten Quellsignale in einer Kurzzeitspeichervorrichtung (42) und des Übertragens der Quellinformation an eine RAM-Anordnungs-Speichervorrichtung (114), bevor sie auf der Kundenvorrichtung wiedergegeben wird.

29. Verfahren nach Anspruch 28, ferner umfassend den Schritt des Übertragens der kodierten Quellsignale von der - Langzeitspeichervorrichtung (44) über ein Weitverkehrsnetz (150) an die RAM-Anordnungs-Speichervorrichtung (114).

30. Verfahren nach irgendeinem vorangehenden Anspruch, ferner umfassend den Schritt des Speicherns von Werbespots in einer Speichervorrichtung, zum Einfügen an vorbestimmten Stellen (202) in die wiedergegebenen kodierten Quellsignale vor der Übermittlung an eine Kundenvorrichtung.

31. Verfahren nach Anspruch 30, ferner umfassend den Schritt des Ersetzens der Wiedergabe und Übermittlung der ausgewählten kodierten Quellsignale durch die Wiedergabe und Übermittlung der in der Datenbank gespeicherten Werbespots an die Kundenvorrichtung.

32. Verfahren nach irgendeinem vorangehenden Anspruch, ferner umfassend den Schritt des Speicherns von Werbespots in der Kundenvorrichtung (47).

33. Verfahren nach Anspruch 32, ferner umfassend den Schritt des Wiedergebens der in der Kundenvorrichtung gespeicherten Werbespots an vorbestimmten Stellen, durch Ersetzen der übertragenen kodierten Quellsignale durch die in der Kundenvorrichtung gespeicherten Werbespots.

34. Verfahren nach irgendeinem vorangehenden Anspruch, ferner umfassend den Schritt des Übermittelns spezifischer Werbespots an eine Kundenvorrichtung zum lokalen Speichern darin, basierend auf von einem Nutzer gelieferten persönlichen Informationen.

35. Verfahren nach irgendeinem vorangehenden Anspruch, ferner umfassend den Schritt des Einfügens von Werbespots in die kodierten Quellsignale, während diese in der Speichervorrichtung gespeichert werden.

36. Verfahren nach Anspruch 10, ferner umfassend den Schritt des Einfügens der Werbung basierend auf Präferenzen, die von einem bestimmten Nutzer einer Kundenvorrichtung ausgewählt wurden.

37. Verfahren nach irgendeinem vorangehenden Anspruch, ferner umfassend den Schritt des Präsentierens eines Menüs spezifischer Werbungstreibender und des Erlaubens, dass ein Nutzer die Werbungstreibenden auswählt, so dass Werbung der ausgewählten Werbungstreibenden in die gespeicherten oder wiedergegebenen kodierten Quellsignale eingefügt werden kann.

38. Verfahren nach irgendeinem vorangehenden Anspruch, ferner umfassend den Schritt des Präsentierens eines Menüs spezifischer Produkte durch die Kundenvorrichtung an den Nutzer und des Erlaubens, dass ein Kunde die Produkte auswählt, so dass Werbung für die ausgewählten Produkte in die gespeicherten oder wiedergegebenen kodierten Quellsignale eingefügt werden kann.

39. Verfahren nach irgendeinem vorangehenden Anspruch, ferner umfassend den Schritt des Präsentierens eines Menüs spezifischer Produktgruppierungen nach Kategorien durch die Kundenvorrichtung an den Nutzer und des Erlaubens, dass der Nutzer Produktkategorien auswählt, so dass Werbung, die den ausgewählten Kategorien entspricht, in die kodierten Quellsignale eingefügt werden kann, bevor sie durch die Kundenvorrichtung wiedergegeben wird.

40. Verfahren nach irgendeinem vorangehenden Anspruch, ferner umfassend den Schritt (S700-S712) des Aufnehmens von Live-Sendungen, während sie ausgestrahlt werden, und des Kodierens derselben zum Speichern in der Speichervorrichtung.

41. Gerät zur Aufzeichnung von Video- und/oder Audioprogrammen und zur Wiedergabe der Programme auf Wunsch, wobei das Gerät (10) umfasst:
eine Einrichtung (18, 20, 22) zum Wiedergeben von Quellsignalen;
eine Einrichtung (120) zum Kodieren der Quellsignale zum Speichern in einer Speichervorrichtung,
eine Einrichtung zum Identifizieren der Quellsignale unter eindeutigen Elementadressen,
eine Einrichtung (30, 48) zum Speichern der eindeutigen Elementadressen in einer Datenbank (54),
eine Einrichtung (30) zum Speichern der kodierten Quellsignale in einer Speichervorrichtung (46, 42, 44) für ein anschließendes Abrufen,
eine Einrichtung (30) zum Erzeugen eines Elementemenüs aus den in der Datenbank gespeicherten eindeutigen Elementadressen,
eine Einrichtung (38, 40) zum Übermitteln des Elementemenüs über ein Netzwerk an eine Kundenvorrichtung (47),
eine Einrichtung (47a) zum Anzeigen des Elementemenüs,
eine Einrichtung zum Auswählen eines oder mehrerer der angezeigten Elemente aus einer Kundenvorrichtung für eine Wiedergabe,
eine Einrichtung (30) zum Wiedergeben der kodierten Quellsignale, die dem ausgewählten Element entsprechen,
eine Einrichtung (38, 40) zum Übermitteln der wiedergegebenen kodierten Quellsignale über ein Netzwerk an die Kundenvorrichtung, und
eine Einrichtung zum Wiedergeben der kodierten Quellsignale aus der Kundenvorrichtung zum Abspielen in entweder einem Audio- und/oder einem Videoformat;
**dadurch gekennzeichnet, dass** die Einrichtungen (30, 38, 40) zum Wiedergeben und Übermitteln der kodierten Quellsignale betreibbar sind, während des Speicherns durch die Quellsignalspeichervorrichtung der kodierten Quellsignale für ein Programm in der Speichervorrichtung, die kodierten Quellsignale für dieses Programm wiederzugeben und an die Kundenvorrichtung zu übermitteln.

42. Gerät nach Anspruch 41, umfassend:
eine Einrichtung zum Kodieren der Quellsignale für einen voraufgezeichneten ersten Programminhalt zu vorbestimmten Zeitpunkten zum Einfügen eines ausgewählten zweiten Programminhalts während der Wiedergabe des ersten Programminhalts;
eine Einrichtung zum Wiedergeben des ersten Programminhalts;
eine Einrichtung zum Anhalten der Wiedergabe des ersten Programminhalts zum Einfügen des zweiten Programminhalts;
eine Einrichtung zum Wiedergeben des zweiten Programminhalts; und
eine Einrichtung zum Fortsetzen der Wiedergabe des ersten Programminhalts,
wobei der erste Programminhalt als Reaktion auf einen Befehl eines Nutzers der Kundenvorrichtung wiedergegeben wird und der zweite Programminhalt in Übereinstimmung mit einem Profil für diesen Nutzer ausgewählt wird.

43. Gerät nach Anspruch 41 oder 42, das ausgelegt ist, gleichzeitig eine Vielzahl der kodierten Quellsignale von einer Vielzahl von Quellen an eine Vielzahl von Nutzern zu verteilen, wobei das Gerät umfasst:
eine Vielzahl von Eingangs-/Ausgangsfluss-Modulen (100), die parallel mit einer Rückwandplatine (104) verbunden sind, und
mindestens ein Speichermodul (102), das mit der Rückwandplatine verbunden ist,
wobei die Eingangs-/Ausgangsfluss-Module eine Vielzahl von Eingangs-/Ausgangs-Zugriffsverarbeitungseinheiten (112) und einen Direktzugriffsspeicher (114) aufweisen,
wobei der Direktzugriffsspeicher mit der Rückwandplatine verbunden ist und die Eingangs-/Ausgangs-Zugriffsverarbeitungseinheiten mit dem Direktzugriffsspeicher verbunden sind, wobei der Direktzugriffsspeicher imstande ist, mindestens zwei audiovisuelle Datenströme wiederzugeben,
wobei das Speichermodul einen mit der Rückwandplatine verbundenen Bus-Arbitrator und eine Vielzahl von mit dem Bus-Arbitrator verbundenen Speicherzugriffsverarbeitungseinheiten aufweist.

44. Gerät nach Anspruch 41, 42 oder 43, das ausgelegt ist, gleichzeitig eine Vielzahl der kodierten Quellsignale von einer Vielzahl von Quellen an eine Vielzahl von Nutzern zu verteilen, wobei das Gerät umfasst:
ein RAM-Cache-Serversystem (46a-c), wobei die Quellsignale zumindest vorübergehend in dem RAM-Cache-Serversystem gespeichert sind,
eine Vielzahl von Datenstromumschaltern (152a-c), die zwischen das RAM-Cache-Serversystem und die Nutzer geschaltet sind, wobei ausgewählte Quellsignale durch die Datenstromumschalter auf Wunsch zu einem oder mehreren der Nutzer gesendet werden,
einen Kurzzeitsignalspeicher (42a-c), der mit dem RAM-Cache-Serversystem verbunden ist,
einen Langzeitsignalspeicher (44a-c), der mit dem RAM-Cache-Serversystem verbunden ist, wobei der eine oder die mehreren Nutzer durch einen System-Controller (30a-c) Informationssignale anfordern können, die in dem RAM-Cache-Serversystem, dem Kurzzeitspeicher oder dem Langzeitspeicher gespeichert sind,
wobei der System-Controller die ausgewählten gespeicherten Quellsignale in dem RAM-Cache-Serversystem lokalisiert,
wobei der Kurzzeitspeicher oder der Langzeitspeicher die ausgewählten gespeicherten Quellsignale veranlasst, für die Nutzer abgerufen und wiedergegeben zu werden,
wobei der System-Controller eine Aufzeichnung der Wiedergabe für Abrechnungszwecke in Bezug auf die Nutzer und für Zahlungszwecke in Bezug auf die Quellen erstellt, falls erforderlich,
wobei der System-Controller für eine vorbestimmte Zeit in vorbestimmten Intervallen ausgewählte Werbung in die Wiedergabe einfügt und eine Aufzeichnung der Einfügung von Werbung erstellt.

45. Gerät nach Anspruch 44, wobei die Werbung in Übereinstimmung mit Nutzerprofilen (266) ausgewählt wird.

## Revendications

1. Procédé d'enregistrement de programmes vidéo et/ou audio et de reproduction desdits programmes à la demande, ledit procédé comprenant les étapes :
de reproduction de signaux de source ;
de codage (S702) desdits signaux de source pour stockage dans un dispositif (46, 42, 44) de stockage ;
d'identification (S704) desdits signaux de source sous des adresses uniques d'article ;
de stockage (S708) des adresses uniques d'article dans une base de données (54) ;
de stockage (S706) desdits signaux codés de source dans un dispositif (46, 42, 44) de stockage pour récupération ultérieure ;
de création (S620) d'un menu d'articles à partir desdites adresses uniques d'article stockées dans ladite base de données ;
de transmission (S622) du menu d'articles sur un réseau à un dispositif client (47) ;
d'affichage (S624) dudit menu d'articles ;
de choix (S638) pour reproduction d'un ou plusieurs desdits articles affichés à partir d'un dispositif client ;
de reproduction (S650 à S662) desdits signaux codés de source correspondant audit article choisi ;
de transmission (S664, S666) desdits signaux codés reproduits de source sur un réseau au dispositif client ; et
de reproduction desdits signaux codés de source à partir dudit dispositif client pour lecture dans l'un ou l'autre d'un format audio et/ou vidéo ;
**caractérisé en ce que**, au cours du stockage desdits signaux codés de source pour un programme dans ledit dispositif de stockage, les signaux codés de source pour ce programme sont reproduits et transmis audit dispositif client.

2. Procédé selon la revendication 1, dans lequel, lors de la création dudit menu, un article correspondant à un programme pour lequel les signaux de source n'ont pas encore été complètement codés et stockés est inclus dans le menu.

3. Procédé selon la revendication 1 ou 2, comprenant en outre l'étape de reproduction et de transmission desdits signaux codés de source avant de stocker tout le programme dans ledit dispositif de stockage.

4. Procédé selon la revendication 1, 2 ou 3, comprenant en outre l'étape (S530 ; S670) de suspension à distance de la reproduction et de la transmission desdits signaux codés de source.

5. Procédé selon la revendication 4, comprenant en outre l'étape consistant à permettre à un utilisateur d'un dispositif client de suspendre à distance la reproduction et la transmission desdits signaux codés de source avant de terminer le stockage desdits signaux codés de source dans ledit dispositif de stockage.

6. Procédé selon l'une quelconque des revendications 1 à 5, comprenant en outre la réception (S530 à S590 ; S690, S697) d'un utilisateur du dispositif client, qui est à ce moment en train de lire et de visualiser des signaux de source pour au moins un programme, d'instructions en ce qui concerne les signaux de source pour le programme ou les programmes concernés à des fins de commande de transmission de ces signaux de source au dispositif client.

7. Procédé selon l'une quelconque des revendications précédentes, comprenant les étapes :
de codage des signaux de source pour le contenu préenregistré d'un premier programme à des moments prédéterminés (202) pour insertion du contenu choisi (208) d'un second programme pendant la reproduction du contenu du premier programme ;
de reproduction du contenu du premier programme ;
d'arrêt de la reproduction du contenu du premier programme pour insertion du contenu du second programme ;
de reproduction du contenu du second programme ; et
de poursuite de la reproduction du contenu du premier programme ;
dans lequel le contenu du premier programme est reproduit en réponse à une instruction provenant d'un utilisateur dudit dispositif client, et le contenu du second programme est choisi d'après un profil (266) pour cet utilisateur.

8. Procédé selon l'une quelconque des revendications précédentes, comprenant en outre l'étape d'insertion de publicités vidéo et/ou audio (208) dans des emplacements choisis desdits signaux codés de source.

9. Procédé selon la revendication 8, comprenant en outre l'étape consistant de création d'une base de données (272) qui contient des publicités audio et/ou vidéo.

10. Procédé selon la revendication 9, comprenant en outre l'étape d'insertions desdites publicités dans lesdits signaux codés de source stockés ou reproduits.

11. Procédé selon la revendication 10, comprenant en outre l'étape d'insertion desdites publicités en se basant sur un critère prédéterminé développé à partir du profil personnel de l'utilisateur d'un dispositif client.

12. Procédé selon la revendication 11, comprenant en outre l'étape de détermination de l'utilisateur du dispositif client en permettant à l'utilisateur/ l'utilisatrice du dispositif client de choisir son profil personnel (S500c) lors de l'utilisation du dispositif client.

13. Procédé selon l'une quelconque des revendications précédentes, comprenant en outre l'étape de choix (S500e) d'un portail de canal, ledit portail de canal affichant un menu d'articles qui sont disponibles pour reproduction au moyen dudit dispositif client et qui correspondent auxdits signaux codés de source stockés dans ledit dispositif de stockage.

14. Procédé selon l'une quelconque des revendications précédentes, comprenant en outre l'étape de fourniture d'un moteur de recherche qui est accessible au moyen dudit dispositif client, qui permet à un utilisateur de mener une recherche de deux articles ou plus dans ladite base de données.

15. Procédé selon l'une quelconque des revendications précédentes, comprenant en outre une base de données de mots-clés (250, 252, 254, 256) qui identifient de l'information pertinente relative auxdits signaux codés de source stockés dans ledit dispositif de stockage.

16. Procédé selon la revendication 14, comprenant en outre l'étape (S624) d'affichage des résultats de ladite recherche par ledit dispositif client.

17. Procédé selon la revendication 16, comprenant en outre l'étape (S638) de choix d'un article à partir des résultats de ladite recherche pour reproduction au moyen dudit dispositif client.

18. Procédé selon la revendication 13, comprenant en outre l'étape de choix d'un article correspondant auxdits signaux codés de source pour reproduction au moyen dudit dispositif client.

19. Procédé selon la revendication 16, comprenant en outre l'étape de choix de multiples articles à partir des résultats de ladite recherche et de détermination de l'ordre de reproduction.

20. Procédé selon la revendication 13, comprenant en outre l'étape de choix de multiples articles et de détermination de l'ordre de reproduction.

21. Procédé selon la revendication 13, comprenant en outre l'étape de choix du moment de reproduction desdits articles choisis pour reproduction.

22. Procédé selon la revendication 20, comprenant en outre l'étape de choix du moment de reproduction desdits articles choisis.

23. Procédé selon l'une quelconque des revendications précédentes, comprenant en outre l'étape de stockage desdits signaux codés de source dans un dispositif (44) de stockage à long terme et de transfert desdits signaux de source à un dispositif (42) de stockage à court terme avant d'être reproduits et transmis audit dispositif client.

24. Procédé selon la revendication 23, comprenant en outre l'étape de transfert desdits signaux codés de source dudit dispositif (44a à c) de stockage à long terme sur un réseau (150) à grande distance audit dispositif (42a à c) de stockage à court terme.

25. Procédé selon la revendication 23, comprenant en outre l'étape de transfert desdits signaux codés de source stockés dans ledit dispositif (42) de stockage à court terme à un dispositif (114) de stockage à groupement de RAMs pour reproduction vers ledit dispositif client.

26. Procédé selon l'une quelconque des revendications précédentes, comprenant en outre l'étape de stockage desdits signaux codés de source dans un dispositif (44) de stockage à long terme et de transfert desdits signaux codés de source à un dispositif (114) de stockage à groupement de RAMs avant d'être reproduits vers ledit dispositif client.

27. Procédé selon la revendication 26, comprenant en outre l'étape de transfert desdits signaux codés de source dudit dispositif (44a à c) de stockage à long terme sur un réseau (150) à grande distance audit dispositif (114) de stockage à groupement de RAMs.

28. Procédé selon l'une quelconque des revendications précédentes, comprenant en outre l'étape de stockage desdits signaux codés de source dans un dispositif (42) de stockage à court terme et de transfert de ladite information de source à un dispositif (114) de stockage à groupement de RAMs avant d'être reproduite vers ledit dispositif client.

29. Procédé selon la revendication 28, comprenant en outre l'étape de transfert desdits signaux codés de source dudit dispositif (44) de stockage à court terme sur un réseau (150) à grande distance audit dispositif (114) de stockage à groupement de RAMs.

30. Procédé selon l'une quelconque des revendications précédentes, comprenant l'étape de stockage d'annonces commerciales dans un dispositif de stockage pour insertion à des points prédéterminés (202) dans lesdits signaux codés reproduits de source avant transmission à un dispositif client.

31. Procédé selon la revendication 30, comprenant en outre l'étape de remplacement de la reproduction et transmission desdits signaux codés choisis de source par la reproduction et transmission, audit dispositif client, desdites annonces commerciales stockées dans ladite base de données.

32. Procédé selon l'une quelconque des revendications précédentes, comprenant en outre l'étape de stockage d'annonces commerciales dans ledit dispositif client (47).

33. Procédé selon la revendication 32, comprenant en outre l'étape de reproduction desdites annonces commerciales stockées dans ledit dispositif client à des points prédéterminés, par remplacement desdits signaux codés transmis de source par lesdites annonces commerciales stockées dans ledit dispositif client.

34. Procédé selon l'une quelconque des revendications précédentes, comprenant en outre l'étape de transmission d'annonces commerciales spécifiques à un dispositif client pour stockage locale dans celui-ci, en se basant sur de l'information personnelle fournie par un utilisateur.

35. Procédé selon l'une quelconque des revendications précédentes, comprenant en outre l'étape d'insertion d'annonces commerciales dans lesdits signaux codés de source au moment où ils sont stockés dans ledit dispositif de stockage.

36. Procédé selon la revendication 10, comprenant en outre l'étape d'insertion desdites publicités en se basant sur des préférences choisies par un utilisateur particulier d'un dispositif client.

37. Procédé selon l'une quelconque des revendications précédentes, comprenant en outre l'étape de présentation d'un menu d'annonceurs spécifiques et d'invitation de l'utilisateur à choisir les annonceurs, de sorte que des publicités provenant desdits annonceurs choisis peuvent être insérées dans lesdits signaux codés de source stockés ou reproduits.

38. Procédé selon l'une quelconque des revendications précédentes, comprenant en outre l'étape de présentation, à l'utilisateur au moyen du dispositif client, d'un menu de produits spécifiques et d'invitation d'un client à choisir lesdits produits, de sorte que des publicités pour lesdits produits choisis peuvent être insérées dans lesdits signaux codés de source stockés ou reproduits.

39. Procédé selon l'une quelconque des revendications précédentes, comprenant en outre l'étape de présentation, à l'utilisateur au moyen du dispositif client, d'un menu de groupements de produits par catégorie et d'invitation d'un client à choisir des catégories de produits, de sorte que des publicités qui correspondent auxdites catégories choisies peuvent être insérées dans lesdits signaux codés de source avant d'être reproduits par ledit dispositif client.

40. Procédé selon l'une quelconque des revendications précédentes, comprenant en outre l'étape (S700 à S712) de saisie d'émissions en direct telles qu'elles sont diffusées et de leur codage pour stockage dans ledit dispositif de stockage.

41. Appareil destiné à enregistrer des programmes vidéo et/ou audio et à reproduire lesdits programmes à la demande, l'appareil (10) comprenant :
un moyen (18, 20, 22) destiné à reproduire des signaux de source ;
un moyen (120) destiné à coder lesdits signaux de source pour stockage dans un dispositif de stockage ;
un moyen destiné à identifier lesdits signaux de source sous des adresses uniques d'article ;
un moyen (30, 48) destiné à stocker les adresses uniques d'article dans une base de données (54) ;
un moyen (30) destiné à stocker lesdits signaux codés de source dans un dispositif (46, 42, 44) de stockage pour récupération ultérieure ;
un moyen (30) destiné à créer un menu d'articles à partir desdites adresses uniques d'article stockées dans ladite base de données ;
un moyen (38, 40) destiné à transmettre le menu d'articles sur un réseau à un dispositif client (47) ;
un moyen (47a) destiné à afficher ledit menu d'articles ;
un moyen destiné à choisir, pour reproduction, un ou plusieurs desdits articles affichés à partir d'un dispositif client ;
un moyen (30) destiné à reproduire lesdits signaux codés de source correspondant audit article choisi ;
un moyen (38, 40) destiné à transmettre lesdits signaux codés reproduits de source sur un réseau au dispositif client ; et
un moyen destiné à reproduire lesdits signaux codés de source à partir dudit dispositif client pour lecture dans l'un ou l'autre d'un format audio et/ou vidéo ;
**caractérisé en ce que** le moyen (30, 38, 40) destiné à reproduire et à transmettre les signaux codés de source est utilisable, au cours du stockage par ledit moyen de stockage de signaux de source desdits signaux codés de source pour un programme dans ledit dispositif de stockage, pour reproduire et transmettre audit dispositif client les signaux codés de source pour ce programme.

42. Appareil selon la revendication 41, comprenant :
un moyen destiné à coder les signaux de source pour le contenu préenregistré d'un premier programme à des moments prédéterminés pour insertion du contenu choisi d'un second programme pendant la reproduction du contenu du premier programme ;
un moyen destiné à reproduire le contenu du premier programme ;
un moyen destiné à arrêter la reproduction du contenu du premier programme pour insertion du contenu du second programme ;
un moyen destiné à reproduire le contenu du second programme ; et
un moyen destiné à poursuivre la reproduction du contenu du premier programme ;
dans lequel le contenu du premier programme est reproduit en réponse à une instruction provenant d'un utilisateur dudit dispositif client, et le contenu du second programme est choisi d'après un profil pour cet utilisateur.

43. Appareil selon la revendication 41 ou 42, apte à distribuer simultanément une pluralité desdits signaux codés de source à partir d'une pluralité de sources à une pluralité d'utilisateurs, comprenant :
une pluralité de modules (100) de flux d'entrée/sortie connectés en parallèle à un fond de panier (104) ; et
au moins un module (102) de stockage connecté audit fond de panier ;
lesdits modules de flux d'entrée/sortie comportant une pluralité d'unités (112) de traitement d'accès d'entrée/ sortie, et une mémoire vive (114) ;
ladite mémoire vive étant connectée audit fond de panier et lesdites unités de traitement d'accès d'entrée/ sortie étant connectées à ladite mémoire vive, ladite mémoire vive étant capable de reproduire au moins 2 flux de données audiovisuelles ;
ledit module de stockage comportant un arbitre de bus connecté audit fond de panier et une pluralité d'unités de traitement d'accès de stockage connectées audit arbitre de bus.

44. Appareil selon la revendication 41, 42 ou 43, apte à distribuer simultanément une pluralité desdits signaux codés de source à partir d'une pluralité de sources à une pluralité d'utilisateurs, comprenant :
un système (46a à c) de serveur d'antémémoires de RAM, lesdits signaux de source étant au moins temporairement stockés dans ledit système de serveur d'antémémoires de RAM ;
une pluralité de commutateurs (152a à c) de flux connectés entre ledit système de serveur d'antémémoires de RAM et les utilisateurs, des signaux choisis de source étant envoyés à la demande à un ou plusieurs des utilisateurs par l'intermédiaire desdits commutateurs de flux ;
un stockage (42a à c) de signal à court terme connecté audit système de serveur d'antémémoires de RAM ;
un stockage (44a à c) de signal à long terme connecté audit système de serveur d'antémémoires de RAM, lesdits un ou plusieurs utilisateurs étant capables de demander des signaux d'information stockés dans ledit système de serveur d'antémémoires de RAM, dans ledit stockage à court terme ou dans ledit stockage à long terme par l'intermédiaire d'un régisseur (30a à c) du système ;
ledit régisseur du système localisant lesdits signaux stockés choisis de source dans ledit système de serveur d'antémémoires de RAM ;
ledit stockage à court terme ou ledit stockage à long terme, faisant que lesdits signaux stockés choisis sont récupérés et reproduits pour lesdits utilisateurs ;
ledit régisseur du système faisant un enregistrement de ladite reproduction à des fins de facturation en ce qui concerne lesdits utilisateurs et à des fins de paiement en ce qui concerne lesdites sources si nécessaire ;
ledit régisseur du système insérant des publicités choisies dans ladite reproduction pendant des temps prédéterminés à des intervalles prédéterminés, et faisant un enregistrement de ladite insertion de publicités.

45. Appareil selon la revendication 44, dans lequel lesdites publicités sont choisies en fonction de profils (266) d'utilisateur.
